# EUROPEAN PATENT SPECIFICATION

(11) **EP 3 083 827 B1**
(45) Date of publication and mention of the grant of the patent: **22.11.2017**
(21) Application number: 14789414.1
(22) Date of filing: 03.10.2014
(51) Int. Cl.: C08L 67/02, C08K 5/00, C08K 7/14

(54) **POLYESTER/POLYCARBONATE COMPOSITION AND ARTICLE**
POLYESTER-/POLYCARBONATZUSAMMENSETZUNG UND ARTIKEL
COMPOSITION POLYESTER/POLYCARBONATE ET ARTICLE

(30) Priority: 18.12.2013 US 201361917583 P
(43) Date of publication of application: 26.10.2016
(73) Proprietor: SABIC Global Technologies B.V., 4612 PX Bergen op Zoom (NL)
(72) Inventor: WEI, Zhenke, Shanghai 201319 (CN); SHI, Hongtao, Shanghai 201319 (CN); SHEN, Dake, Shanghai 201319 (CN)
(74) Representative: Balder IP Law, S.L.
(86) International application number: PCT/IB2014/065042
(87) International publication number: WO 2015/092559

(56) References cited:
- US-A- 4 250 279
- US-A1- 2009 036 578
- US-B1- 6 538 054

## Description

### BACKGROUND OF THE INVENTION

Polycarbonate can provide excellent impact performance. A blend of polycarbonate with polyester can offer improvement with respect to chemical resistance. Filler-reinforced polyester-polycarbonate blends are widely used due to their advantages in mechanical strength and chemical resistance, among other properties.

Although a number of references have disclosed such blends, the maximum amount of polyester that can be included in the polyester-polycarbonate blend has been limited, commonly resulting in blends closer to pure polycarbonate in properties than to a more balanced polyester-polycarbonate composition, let alone to a polyester-polycarbonate composition having a greater amount of polyester than polycarbonate. In particular, polyester-polycarbonate blends have been limited for applications that require the high flame retardancy reflected in a UL94 V-0 rating, especially for thinner articles for which a UL94 rating of V-0 is even more difficult to obtain.

Especially for blends having high polyester loadings, brominated fire retardants have been used. More ecologically friendly halogen-free flame retardants have been developed for each of polyester compositions and polycarbonate compositions, but for polyester-polycarbonate blends, especially blends having high polyester loadings, problems exist. Current flame retardants used for polyester can severely degrade polycarbonate. Conversely, current flame retardants used for polycarbonate may not be sufficiently effective for polyester. Furthermore, such flame retardants can plate out on the surface of polyester due to poor compatibility with polyester. Another problem is that the use of halogen-free fire retardants in such blends can result in adverse effects on mechanical properties, including reduced impact strength and/or tensile strength.

U.S. Patent No. 5,030,675 to Wittmann et al. discloses a polymer composition comprising a blend of a polycarbonate and a poly(alkylene terephthalate), the composition having been rendered flame resistant without any chlorine or bromine atoms by using phosphorus-based flame resistant compounds. In particular, the patent discloses obtaining such a flame resistant polymer composition by incorporating into a blend of polycarbonate and poly(alkylene terephthalate) an emulsion-ABS graft copolymer, a monophosphate flame retardant, and a fluorinated polyolefin. However, according to U.S. Patent No. 7,067,567 to Seidel et al., the flame retardant additives tend to plate out on the surface of pellets and molded articles, which can lead to considerable disruption during compounding and molding operations.

U.S. Patent No. 7,067,567 to Seidel et al. addresses the plate-out of flame retardants in such blends by the use of oligomeric organophosphorus flame retardants. In addition, the polyester-polycarbonate compositions contain, apart from an organophosphorus flame retardant, a fluorinated polyolefin copolymer as an anti-dripping agent and an impact modifier such as a rubber-based graft copolymer or a polyolefin-based epoxy copolymer. According to International Patent Application Publication No. WO 2012/058821 A1 of Wan et al., such compositions, while exhibiting good flame resistance, can encounter the problem that other important properties such as impact resistance or heat resistance are lower than the compositions without the organic phosphate. Moreover, the impact modifiers used are easily combustible materials, requiring relatively higher amounts of the organic phosphate to be added in order to keep flame resistance of the material at acceptable levels. To prevent further deterioration of the heat performance of the polymer composition, such as heat distortion temperature and Vicat softening temperature, the maximum amount of polyester that can be used is limited.

In particular, U.S. Patent No. 7,067,567 shows examples that limit the use of polyester to a maximum of 12 weight percent, which in turn limits the chemical resistance of the final composition. The patent states that as the weight ratio of poly(ethylene terephthalate) to polycarbonate increases, reductions are exhibited in the notched impact strength, elongation at tear, weld line strength, dimensional stability and the flame resistance. U.S. Patent No. 7,067,567 discloses as preferred phosphorus-containing compounds bisphenol A-based phosphate esters, such as bisphenol A bis(diphenyl phosphate).

International Patent Application Publication No. WO 2012/058821 A1 of Wan et al. discloses a polyester-polycarbonate composition that comprises, based on the total weight of the composition, more than 12 to 30 weight percent of polyester, 21.7 to 81.3 weight percent of polycarbonate, 5 to less than 60 weight percent of organopolysiloxane-polycarbonate block copolymer comprising from 10 to 50 weight percent of polydiorganosiloxane units, 1 to 20 weight percent of organophosphorus flame retardant, and 0.02 to 5 weight percent of fluorinated polyolefin. The addition of the organopolysiloxane-polycarbonate block copolymer was found to further improve the fire-retardant properties of the polyester-polycarbonate blend, although the amount of the polyester was still limited to less than the amount of the polycarbonate. Nevertheless, some improvement in the balance of properties was obtained, including a Vicat softening temperature of greater than 100°C, measured in accordance with ASTM 1525 at 50 Newtons and a heating rate of 120°C/hour, a notched Izod impact strength of greater than 400 joules/meter, specifically greater than 500 joules/meter, measured at 23°C in accordance with ASTM D256 on a sample bar molded from the composition and having a thickness of 3.2 millimeters, and a UL94 flammability rating of V-0 measured on a molded sample having a thickness of 1.5 millimeters.

European Patent No. 564,545 B1 to de Wit et al. discloses polyester-polycarbonate compositions in which the amount of polyester is greater than the amount of polycarbonate. No glass fibers were used in the working examples. A V-0 rating was obtained only with tetraphenyl resorcinol diphosphate (RDP). Furthermore, the patent states that a test with triphenylphosphine oxide as flame retardant was unsuccessful, concluding that the phenyl groups of triphenylphosphine oxide were not as efficient as the phenoxy groups of phenyl phosphate esters. The patent also discloses using polyester in combination with, instead of polycarbonate, polyetherimide (PEI) in an amount of 60 to 10 parts based on polymer content.

U.S. Patent No. 6,686,404 to Eckel et al. also used RDP as a flame retardant, in the amount of 1 or 4 percent in the examples, in a composition comprising polycarbonate (at least 88%) and acrylonitrile-butadiene-styrene terpolymer (about 4%), further requiring a second polymer, styrene-acrylonitrile copolymer, and a perfluoroalkane sulfonate salt.

Triphenylphosphine oxide has been disclosed for use as a fire retardant in polyester compositions. For example, U.S. Patent 6,103,797 to Klatt et al. discloses a thermoplastic molding composition comprising polyester (30 to 97%), melamine cyanurate, and at least one phosphorous-containing flame retardant which contains phosphorus in a valence state of -1,-2, or -3. In particular, such phosphorus compounds can include phosphine oxides, specifically triphenylphosphine oxide. An exemplary composition comprises 40 weight percent poly(butylene terephthalate), 15 weight percent melamine cyanurate, 20 weight percent triphenylphosphine oxide, and 25 weight percent glass fiber. A UL94 rating of V-0 was obtained for a 1/15 inch (about 1.7 millimeters) test sample. The patent also mentions that elastomers such as ABS can be combined with poly(butylene terephthalate). The patent states that mixtures of poly(alkylene terephthalate)s and fully aromatic polyesters can be employed. The patent then defines "polyesters" to include polycarbonates, wherein the polycarbonate can be used in an amount of up to 90% by weight, based on 100% by weight of the polyester component. U.S. Patent 6,103,797, however, does not provide any examples of polyester-polycarbonate blends and does not experimentally address the issue of flame retardant plate-out or the effect of possible flame retardants on mechanical properties.

U.S. Patent No. 6,538,054, also to Klatt et al., discloses a similar polyester composition, but is directed to the further addition of pentaerythritol tetrastearate, in order to obtain less weight loss on heating that resulted in surface migration that was found to compromise the V-0 rating of the composition. Still, referring to the results in Table 2, even when using pentaerythritol tetrastearate, significantly more surface migration occurred using triphenylphosphine oxide than using triphenyl phosphate or resorcinol bis(diphenyl phosphate). Thus, subsequent examples, specifically Examples 11-23, used RDP, but not triphenylphosphine oxide.

U.S. Patent application 4,250,279 A to Maresca et al., discloses molding compositions comprising blends of a polyarylate derived from a dihydric phenol and a dicarboxylic acid, and a polyetherimide. The compositions can also contain thermoplastic polymers compatible with the blends of polyarylate and polyetherimide. The compositions can be prepared by any conventional mixing methods and may include other additives. These additives may include, among others, flame retardant additives, particularly, decabromodiphenyl ether and triarylphospates, such as triphenylphosphate; and reinforcing agents, such as glass fibers. The specific combination of a nitrogen-containing flame retardant and organophosphine oxide, and the amount of glass fibers is, however, not disclosed.

Finally, U.S. patent application 2009/036578 A1 to Elango et al., discloses flame retardant composition comprising a polyester such as a poly(butylene terephthalate); a nitrogen-containing flame retardant; polytherimide; and optionally, a reinforcing filler, such as glass fibers. The use of polycarbonate is not suggested and a second flame retardant different from organophosphine oxide is used.

There remains a need for a polyester-polycarbonate composition that not only comprises a relatively high amount of polyester for solvent resistance, but also exhibits excellent flame resistance, while avoiding plate-out and maintaining or in some cases improving heat resistance and/or melt flow.

### SUMMARY OF THE INVENTION

One embodiment is a composition comprising, based on the total weight of the composition, 15 to 35 weight percent of a poly(alkylene terephthalate); 5 to 25 weight percent of a polycarbonate; 2 to 10 weight percent of a polyetherimide; 12 to 28 weight percent of a flame retardant comprising 2 to 10 weight percent of a nitrogen-containing flame retardant comprising melamine polyphosphate, melamine cyanurate, melamine pyrophosphate, melamine phosphate, or a combination thereof, and 7 to 21 weight percent of an organophosphine oxide having the formula 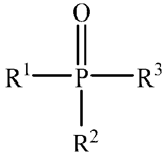 wherein R¹, R², and R³ are each independently C₄-C₂₄ hydrocarbyl; and 20 to 40 weight percent of glass fibers.

Another embodiment is an article comprising the composition.

These and other embodiments are described in detail below.

### DETAILED DESCRIPTION OF THE INVENTION

The present inventors have observed that a high level of flame resistance can be imparted to a polyester-polycarbonate composition and the composition can be advantageously balanced in solvent resistance, heat resistance, and melt flow without the need for halogenated flame retardants. Such an advantageous balance of properties can be obtained using a higher polyester content than in comparative polyester-polycarbonate compositions exhibiting similar flame retardancy. These advantages are obtained in a polyester-polycarbonate composition that includes specific amounts of a polyetherimide, a nitrogen-containing flame retardant, and an organophosphine oxide.

All ranges disclosed herein are inclusive of the endpoints, and the endpoints are independently combinable with each other. Each range disclosed herein constitutes a disclosure of any point or sub-range lying within the disclosed range.

All ASTM tests and data are from the 2003 edition of the Annual Book of ASTM Standards unless otherwise indicated.

For the sake of clarity, the terms "terephthalic acid group," "isophthalic acid group," "butanediol group," and "ethylene glycol group" have the following meanings. The term "terephthalic acid group" in a composition refers to a divalent 1,4-benzene radical (-1,4-C₆H₄-) remaining after removal of the carboxylic groups from terephthalic acid. The term "isophthalic acid group" refers to a divalent 1,3-benzene radical (-1,3-C₆H₄-) remaining after removal of the carboxylic groups from isophthalic acid. The "butanediol group" refers to a divalent butylene radical (-C₄H₈-) remaining after removal of hydroxyl groups from butanediol. The term "ethylene glycol group" refers to a divalent ethylene radical (-C₂H₄-) remaining after removal of hydroxyl groups from ethylene glycol. With respect to the terms "terephthalic acid group," "isophthalic acid group," "ethylene glycol group," "butane diol group," and "diethylene glycol group" being used in other contexts, e.g., to indicate the weight percent of the group in a composition, the term "isophthalic acid group(s)" means the group having the formula (-O(CO)C₆H₄(CO)-), the term "terephthalic acid group" means the group having the formula (-O(CO)C₆H₄(CO)-), the term diethylene glycol group means the group having the formula (-O-C₂H₄-O-C₂H₄-), the term "butanediol group" means the group having the formula (-O-C₄H₈-), and the term "ethylene glycol groups" means the group having formula (-O-C₂H₄-).

One embodiment is a composition comprising, based on the total weight of the composition, 15 to 35 weight percent of a poly(alkylene terephthalate); 5 to 25 weight percent of a polycarbonate; 2 to 10 weight percent of a polyetherimide; 12 to 28 weight percent of a flame retardant comprising 2 to 10 weight percent of a nitrogen-containing flame retardant comprising melamine polyphosphate, melamine cyanurate, melamine pyrophosphate, melamine phosphate, or a combination thereof, and 7 to 21 weight percent of an organophosphine oxide having the formula 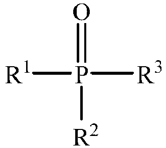 wherein R¹, R², and R³ are each independently C₄-C₂₄ hydrocarbyl; and 20 to 40 weight percent of glass fibers.

The composition comprises a poly(alkylene terephthalate). The alkylene group of the poly(alkylene terephthalate) can comprise 2 to 18 carbon atoms. Examples of alkylene groups are ethylene, 1,3-propylene, 1,4-butylene, 1,5-pentylene, 1,6-hexylene, 1,4-cyclohexylene, 1,4-cyclohexanedimethylene, and combinations thereof. In some embodiments, the alkylene group comprises ethylene, 1,4-butylene, or a combination thereof, and the poly(alkylene terephthalate comprises poly(ethylene terephthalate), poly(butylene terephthalate), or a combination thereof, respectively. In some embodiments, the alkylene group comprises 1,4-butylene and the poly(alkylene terephthalate) comprises poly(butylene terephthalate).

The poly(alkylene terephthalate) can also be a copolyester derived from terephthalic acid (or a combination of terephthalic acid and isophthalic acid) and a mixture comprising a linear C₂-C₆ aliphatic diol, such as ethylene glycol and/or 1,4-butylene glycol), and a C₆-C₁₂ cycloaliphatic diol, such as 1,4-cyclohexane diol, 1,4-cyclohexanedimethanol, dimethanol decalin, dimethanol bicyclooctane, 1,10-decane diol, or a combination thereof. The ester units comprising the two or more types of diols can be present in the polymer chain as individual units or as blocks of the same type of units. Specific esters of this type include poly(1,4-cyclohexylene dimethylene co-ethylene terephthalate) (PCTG) wherein greater than 50 mole percent of the ester groups are derived from 1,4-cyclohexanedimethanol; and poly(ethylene-co-1,4-cyclohexylenedimethylene terephthalate) wherein greater than 50 mole percent of the ester groups are derived from ethylene (PETG).

It will be understood that the poly(alkylene terephthalate) can include small amounts (e.g., up to 10 weight percent, specifically up to 5 weight percent) of residues of monomers other than alkylene diols and terephthalic acid. For example, the poly(alkylene terephthalate) can include the residue of isophthalic acid. As another example, the poly(alkylene terephthalate) can comprises units derived from an aliphatic acid, such as succinic acid, glutaric acid, adipic acid, pimelic acid, 1,4-cyclohexanedicarboxylic acid, and combinations thereof.

In some embodiments, the poly(alkylene terephthalate) is poly(1,4-butylene terephthalate) or "PBT" resin that is obtained by polymerizing a glycol component comprising at least 70 mole percent, specifically at least 80 mole percent, of tetramethylene glycol (1,4-butanediol), and an acid component comprising at least 70 mole percent, specifically at least 80 mole percent, terephthalic acid or polyester-forming derivatives therefore. Commercial examples of PBT include those available under the trade names VALOX™ 315 and VALOX™ 195, manufactured by SABIC Innovative Plastics.

In some embodiments, the poly(alkylene terephthalate) has an intrinsic viscosity of 0.4 to 2.0 deciliter/gram (dl/g), as measured in a 60:40 phenol/tetrachloroethane mixture at 23 °C. In some embodiments, the poly(alkylene terephthalate) has an intrinsic viscosity of 0.5 to 1.5 dl/g, specifically 0.6 to 1.2 dl/g.

In some embodiments, the poly(alkylene terephthalate) has a weight average molecular weight of 10,000 to 200,000 atomic mass units, specifically 50,000 to 150,000 atomic mass units, as measured by gel permeation chromatography (GPC) using polystyrene standards. If a poly(alkylene terephthalate) having a weight average molecular weight less than 10,000 atomic mass units is used, the mechanical properties of the articles molded from the composition can be unsatisfactory. On the other hand, if a poly(alkylene terephthalate) having a weight average molecular weight greater than 200,000 atomic mass units is used, the moldability can be insufficient. The poly(alkylene terephthalate) can also comprise a mixture of two or more poly(alkylene terephthalate)s having different intrinsic viscosities and/or weight average molecular weights.

In some embodiments, the poly(alkylene terephthalate) component comprises a modified poly(butylene terephthalate), that is, a PBT derived in part from poly(ethylene terephthalate) (PET), for example recycled PET from used soft drink bottles. The PET-derived PBT polyester (referred to herein for convenience as a "modified PB%") can be derived from a poly(ethylene terephthalate) component such as poly(ethylene terephthalate), a poly(ethylene terephthalate) copolymer, or a combination thereof. The modified PBT can further be derived from biomass-derived 1,4-butanediol, e.g., corn derived 1,4-butanediol or a 1,4-butanediol derived from a cellulosic material. Unlike conventional molding compositions containing virgin PBT (PBT that is derived from 1,4-butanediol and terephthalic acid monomers), the modified PBT contains units derived from ethylene glycol and isophthalic acid. Use of modified PBT can provide a valuable way to effectively use underutilized scrap PET (from post-consumer or post-industrial streams) in PBT thermoplastic molding compositions, thereby conserving non-renewable resources and reducing the formation of greenhouse gases, e.g., carbon dioxide.

The modified PBT can have at least one residue derived from the poly(ethylene terephthalate) component. Such residue can include residue derived from one or more of ethylene glycol groups, diethylene glycol groups, isophthalic acid groups, antimony-containing compounds, germanium-containing compounds, titanium-containing compounds, cobalt-containing compounds, tin-containing compounds, aluminum, aluminum salts, 1,3-cyclohexane dimethanol isomers, 1,4-cyclohexane dimethanol isomers, the cis isomer of 1,3-cyclohexane dimethanol, the cis isomer of 1,4-cyclohexane dimethanol, the trans isomer of 1,3-cyclohexane dimethanol, the trans isomer of 1,4-cyclohexane dimethanol, alkali salts, alkaline earth metal salts, including calcium, magnesium, sodium and potassium salts, phosphorous-containing compounds and anions, sulfur-containing compounds and anions, naphthalene dicarboxylic acids, 1,3-propanediol groups, and combinations thereof.

Depending on factors such as the type and relative amounts of poly(ethylene terephthalate) and poly(ethylene terephthalate) copolymers, the residue can include various combinations. For example, the residue can include mixtures of units derived from ethylene glycol groups and diethylene glycol groups. The residue can also include mixtures of units derived from ethylene glycol groups, diethylene glycol groups, and isophthalic acid groups. The residue derived from poly(ethylene terephthalate) can include the cis isomer of 1,3-cyclohexane dimethanol groups, the cis isomer of 1,4-cyclohexane dimethanol groups, the trans isomer of 1,3-cyclohexane dimethanol groups, the trans isomer of 1,4-cyclohexane dimethanol groups, and combinations thereof. The residue can also include a mixture of units derived from ethylene glycol groups, diethylene glycol groups, isophthalic acid groups, cis isomer of cyclohexane dimethanol groups, trans isomer of cyclohexane dimethanol groups, and combinations thereof. The residue derived from poly(ethylene terephthalate) can also include mixtures of units derived from ethylene glycol groups, diethylene glycol groups, and cobalt-containing compounds. Such cobalt-containing compound mixtures can also contain isophthalic acid groups.

The amount of the ethylene glycol groups, diethylene glycol groups, and isophthalic groups in the polymeric backbone of the modified PBT component can vary. The modified PBT ordinarily contain units derived from isophthalic acid in an amount that is at least 0.1 mole percent and can range from 0.1 to 10 mole percent. The modified PBT component can also contain units derived from ethylene glycol in an amount that is at least 0.1 mole percent and can range from 0.1 to 10 mole percent. The modified PBT component can also contain units derived from diethylene glycol in an amount of 0.1 to 10 mole percent. In some embodiments, the amount of units derived from butanediol is 95 to 99.8 mole percent. In some embodiments, the amount of units derived from terephthalic acid is 90 to 99.9 mole percent. Unless otherwise specified, all molar amounts of units derived from isophthalic acid and/or terephthalic acid are based on the total moles of units in the composition derived from diacids and/or diesters. Unless otherwise specified, all molar amounts of units derived from 1,4-butanediol, ethylene glycol, and diethylene glycol are based on the total moles of units in the composition derived from diol.

The total amount of the poly(ethylene terephthalate) component residue in the modified PBT can vary in amounts from 1.8 to 2.5 weight percent, or from 0.5 to 2 weight percent, or from 1 to 4 weight percent, based on the total weight of the modified PBT. When it is desirable to make a poly(butylene terephthalate) copolymer having a melting temperature Tₘ that is at least 200°C, the total amount of diethylene glycol, ethylene glycol, and isophthalic acid groups should be within a certain range. As such, the total amount of the diethylene glycol, ethylene glycol, and isophthalic acid groups in the modified poly(butylene terephthalate) component can be more than 0 and less than or equal to 23 equivalents, relative to the total of 100 equivalents of diol and 100 equivalents of diacid groups in the modified PBT. The total amount of inorganic residues derived from the poly(ethylene terephthalate) can be present at more than 0 parts per million by weight (ppm) and up to 1000 ppm. Examples of such inorganic residues include antimony-containing compounds, germanium-containing compounds, titanium-containing compounds, cobalt-containing compounds, tin containing compounds, aluminum, aluminum salts, alkaline earth metal salts (including calcium and magnesium salts), alkali salts (including sodium and potassium salts), phosphorous-containing compounds and anions, sulfur-containing compounds and anions, and combinations thereof. The amounts of inorganic residues can be from 250 to 1000 ppm, more specifically from 500 to 1000 ppm.

Commercial examples of a modified PBT include those available under the trade name VALOX™ iQ Resin, manufactured by SABIC Innovative Plastics Company. The modified PBT can be derived from the poly(ethylene terephthalate) component by any method that involves depolymerization of the poly(ethylene terephthalate) component and polymerization of the depolymerized poly(ethylene terephthalate) component with 1,4-butanediol to provide the modified PBT. For example, the modified poly(butylene terephthalate) component can be made by a process that involves depolymerizing a poly(ethylene terephthalate) and/or a poly(ethylene terephthalate) copolymer, with a 1,4-butanediol component at a temperature from 180°C to 230°C, under agitation, at a pressure that is at least atmospheric pressure in the presence of a catalyst component, at an elevated temperature, under an inert atmosphere, to produce a molten mixture containing an oligomer containing ethylene terephthalate moieties, an oligomer containing ethylene isophthalate moieties, an oligomer containing diethylene terephthalate moieties, an oligomer containing diethylene isophthalate moieties, an oligomer containing butylene terephthalate moieties, an oligomer containing butylene isophthalate moieties, a covalently bonded oligomeric moiety containing at least two of the foregoing moieties, 1,4-butanediol, ethylene glycol, or a combination thereof; and agitating the molten mixture at sub-atmospheric pressure and increasing the temperature of the molten mixture to an elevated temperature under conditions sufficient to form a modified PBT containing at least one residue derived from the poly(ethylene terephthalate) component.

The composition can comprise a combination of virgin poly(alkylene terephthalate) and modified poly(alkylene terephthalate), including a combination of virgin and modified poly(1,4-butylene terephthalate), the latter obtained from recycled poly(ethylene terephthalate) as described above.

The composition comprises the poly(alkylene terephthalate) in an amount of 15 to 35 weight percent, based on the total weight of the composition. Within this range, the poly(alkylene terephthalate) amount can be 20 to 30 weight percent.

In some embodiments, the poly(alkylene terephthalate) and the polycarbonate are present in a weight ratio of 1.2:1 to 4:1, specifically 1.2:1 to 3:1.

In addition to the poly(alkylene terephthalate), the composition comprises a polycarbonate. "Polycarbonate" as used herein means a polymer or copolymer having repeating structural carbonate units of the formula 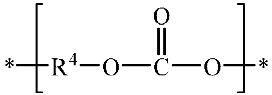 wherein at least 60 percent of the total number of R⁴ groups are aromatic. Specifically, each R⁴ can be derived from a dihydroxy compound such as an aromatic dihydroxy compound of the formula 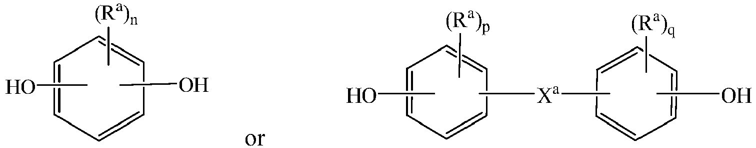 wherein n, p, and q are each independently 0, 1, 2, 3, or 4; R^{a} is independently at each occurrence halogen, or unsubstituted or substituted C₁₋₁₀ hydrocarbyl; and X^{a} is a single bond, -O-, -S-, -S(O)-, -S(O)₂-, -C(O)-, or a C₁₋₁₈ hydrocarbylene, which can be cyclic or acyclic, aromatic or non-aromatic, and can further comprise one or more heteroatoms selected from halogens, oxygen, nitrogen, sulfur, silicon, or phosphorous. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. As used herein, "substituted" means including at least one substituent such as a halogen (i.e., F, Cl, Br, I), hydroxyl, amino, thiol, carboxyl, carboxylate, amide, nitrile, sulfide, disulfide, nitro, C₁₋₁₈ alkyl, C₁₋₁₈ alkoxyl, C₆₋₁₈ aryl, C₆₋₁₈ aryloxyl, C₇₋₁₈ alkylaryl, or C₇₋₁₈ alkylaryloxyl. So, when the hydrocarbyl residue is described as substituted, it can contain heteroatoms in addition to carbon and hydrogen.

Some illustrative examples of specific dihydroxy compounds include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, and 2,3,5,6-tetrabromo hydroquinone.

Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), 1,1-bis(4-hydroxy-3-methylphenyl)-3,3,5-trimethylcyclohexane (isophorone bisphenol), and combinations thereof.

In some embodiments, at least 90 percent of the total number of R⁴ groups in the polycarbonate have the formula 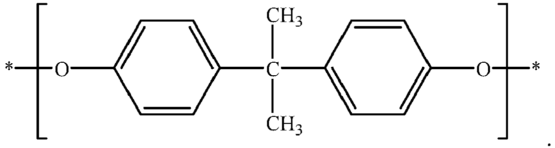 In some embodiments, the polycarbonate comprises or consists of bisphenol A polycarbonate resin.

More than one polycarbonate can be used. For example, the composition can comprise a first polycarbonate having a weight average molecular weight of 18,000 to 25,000 atomic mass units and a second polycarbonate having a weight average molecular weight of 27,000 to 35,000 atomic mass units.

Methods of forming polycarbonates are known, and many are commercially available from suppliers including SABIC Innovative Plastics, Bayer MaterialScience, and Mitsubishi Chemical Corp.

The composition comprises the polycarbonate in an amount of 5 to 25 weight percent, based on the total weight of the composition. Within this range, the polycarbonate amount can be 10 to 20 weight percent.

In addition to the poly(alkylene terephthalate) and the polycarbonate, the composition comprises a polyetherimide. As used herein, the term "polyetherimide" refers to a polymer comprising repeat units having the structure 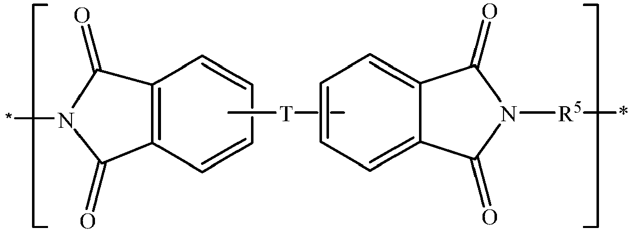 wherein R⁵ is C₁-C₁₈ hydrocarbylene; and T is -O- or a group of the formula -O-Z-O-wherein the divalent bonds of the -O- or the -O-Z-O- group are in the 3,3', 3,4', 4,3', or the 4,4' positions of the adjoining phthalimide groups, and wherein Z comprises 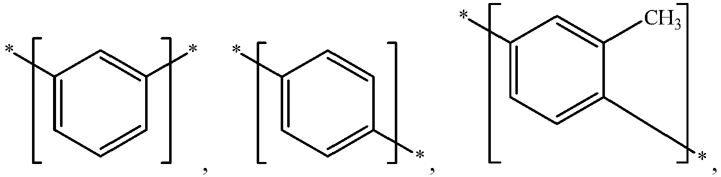 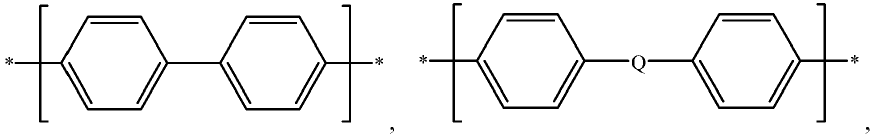 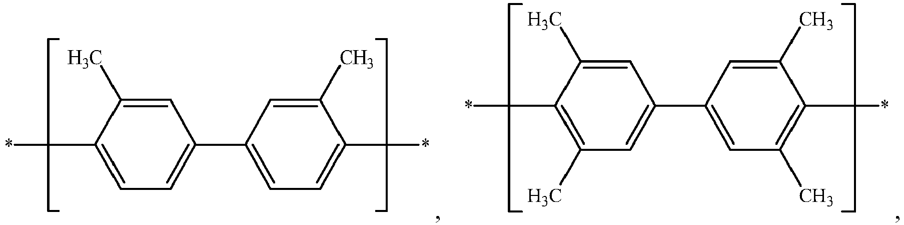 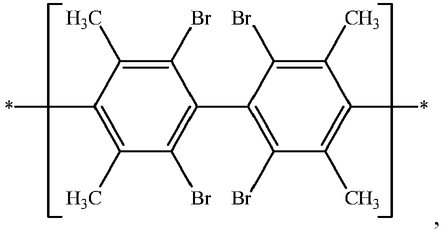 or 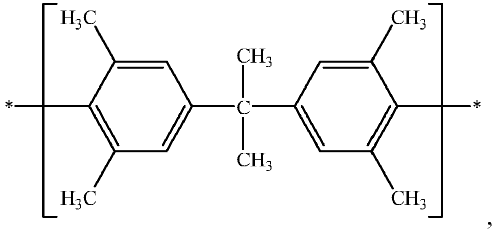 wherein Q is a divalent moiety comprising -O-, -S-, -C(O)-, -SO₂- -SO-, -C_{y}H_{2y}- where y is 1 to 8, or -CₚH_{q}Fᵣ- where p is from 1 to 8, q is 0 to 15, r is 1 to 16, and q + r = 2p.

In some embodiments, the polyetherimide comprises 10 to 1000, specifically 50 to 500, of the repeat units described above.

In some embodiments, each occurrence of R⁵ is independently p-phenylene or m-phenylene, and T is a divalent moiety of the formula

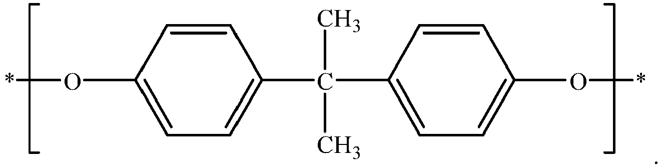

In some embodiments, the polyetherimide comprises 10 to 1000 repeating units having the structure 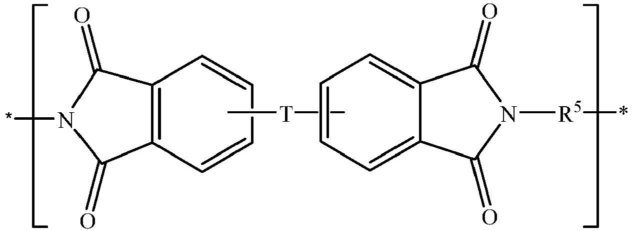 wherein R⁵ is C₆-C₁₈ arylene; T is -O- or a group of the formula -O-Z-O- wherein the divalent bonds of the -O- or the -O-Z-O- group are in the 3,3', 3,4', 4,3', or the 4,4' positions, and wherein Z comprises 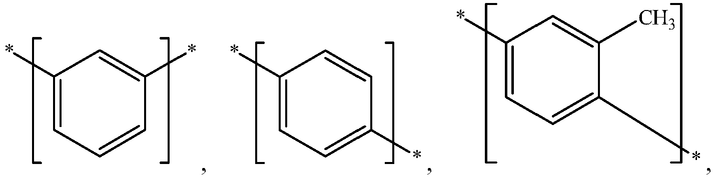 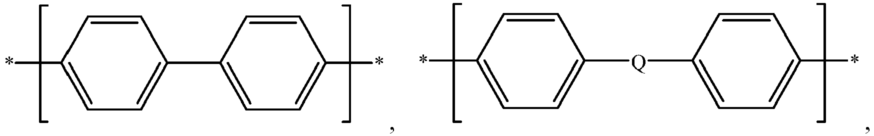 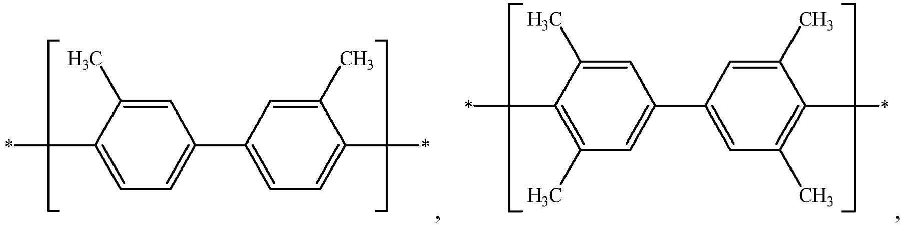 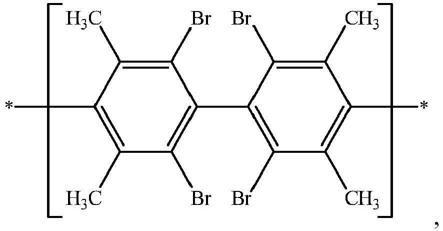 or 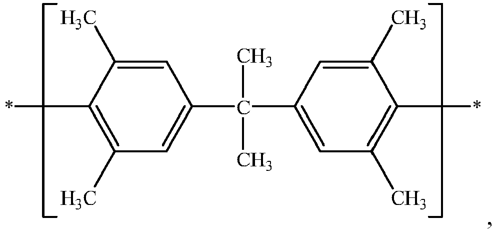 wherein Q comprises -O-, -S-, -C(O)-, -SO₂- -SO-, -C_{y}H_{2y}- where y is 1 to 8, or -CₚH_{q}Fᵣ-where p is from 1 to 8, q is 0 to 15, r is 1 to 16, and q + r = 2p.

In some embodiments, R⁵ is independently at each occurrence meta-phenylene or para-phenylene, and T has the structure

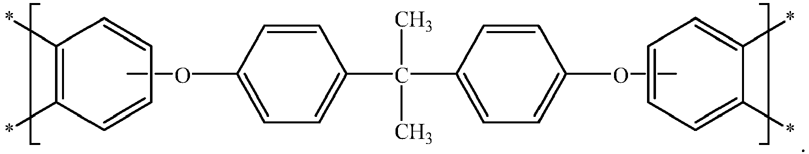

The repeating units of the polyetherimide are formed by the reaction of a bis(ether anhydride) and a diamine. Illustrative examples of aromatic bis(ether anhydride)s include 2,2-bis[4-(3,4-dicarboxyphenoxy)phenyl]propane dianhydride, 4,4'-bis(3,4-dicarboxyphenoxy)diphenyl ether dianhydride, 4,4'-bis(3,4-dicarboxyphenoxy)diphenyl sulfide dianhydride, 4,4'-bis(3,4-dicarboxyphenoxy)benzophenone dianhydride, 4,4'-bis(3,4-dicarboxyphenoxy)diphenyl sulfone dianhydride, 2,2-bis[4-(2,3-dicarboxyphenoxy)phenyl]propane dianhydride, 4,4'-bis(2,3-dicarboxyphenoxy)diphenyl ether dianhydride, 4,4'-bis(2,3-dicarboxyphenoxy)diphenyl sulfide dianhydride, 4,4'-bis(2,3-dicarboxyphenoxy)benzophenone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl-2,2-propane dianhydride, 4-(2,3-dicarboxyphenoxy)-4'-(3,4-dicarboxyphenoxy)diphenyl ether dianhydride, 4-(2,3-dicarboxyphenoxy)-4'-(3,4-dicarboxyphenoxy)diphenyl sulfide dianhydride, 4-(2,3-dicarboxyphenoxy)-4'-(3,4-dicarboxyphenoxy)benzophenone dianhydride, 4-(2,3-dicarboxyphenoxy)-4'-(3,4-dicarboxyphenoxy)diphenyl sulfone dianhydride, and mixtures thereof.

Diamines useful for forming the repeating units of the polyetherimide include those having the formula

H₂N-R⁵-NH₂

wherein R⁵ is as defined above. Examples of specific organic diamines are disclosed, for example, in U.S. Patent Nos. 3,972,902 to Heath et al. and 4,455,410 to Giles. Exemplary diamines include ethylenediamine, propylenediamine, trimethylenediamine, diethylenetriamine, triethylenetertramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5-methyl-4,6-diethyl-1,3-phenylenediamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis (4-aminophenyl) sulfone, bis(4-aminophenyl) ether, 1,3-bis(3-aminopropyl) tetramethyldisiloxane, and mixtures thereof. In some embodiments, the diamine is an aromatic diamine, more specifically, m-phenylenediamine, p-phenylenediamine, sulfonyl dianiline, or a mixture thereof.

In some embodiments, the polyetherimide comprises an imidized copolymer of 1,3-phenylenediamine (CAS Registry No. 108-45-2) and 5,5'-[(1-methylethylidene)bis(4,1-phenyleneoxy)]bis(1,3-Isobenzofurandione) (CAS Registry No. 38103-06-9).

In general, polyetherimide-forming reactions can be carried out employing various solvents, e.g., o-dichlorobenzene, m-cresol/toluene, and the like, to effect a reaction between the dianhydride and the diamine, at temperatures of 100°C to 250°C. Alternatively, the polyetherimide block can be prepared by melt polymerization or interfacial polymerization, e.g., melt polymerization of an aromatic bis(anhydride) and a diamine by heating a mixture of the starting materials to elevated temperatures with concurrent stirring. Generally, melt polymerizations employ temperatures of 200°C to 400°C.

A chain-terminating agent can be employed to control the molecular weight of the polyetherimide. Monofunctional amines such as aniline, or monofunctional anhydrides such as phthalic anhydride can be employed.

In some embodiments, the polyetherimide has a melt index of 0.1 to 10 grams per minute, determined according to ASTM D 1238-04 at 350°C, using a 6.6 kilogram (kg) load. In some embodiments, the polyetherimide resin has a weight average molecular weight of 10,000 to 150,000 grams per mole, as determined by gel permeation chromatography using polystyrene standards. In some embodiments, the polyetherimide has a weight average molecular weight of 20,000 to 60,000. In some embodiments, the polyetherimide has an intrinsic viscosity greater than or equal to 0.2 deciliter per gram, specifically 0.35 to 0.7 deciliter per gram, measured by Ubbelohde viscometer in m-cresol at 25°C.

Polyetherimides are commercially available from, for example, SABIC Innovative Plastics and Kuraray Co. Ltd.

The polyetherimide is used in an amount of 2 to 10 weight percent, based on the total weight of the composition. Within this range, the polyetherimide amount can be 3 to 8 weight percent.

In addition to the poly(alkylene terephthalate), the polycarbonate, and the polyetherimide, the composition comprises a flame retardant. The flame retardant comprises a nitrogen-containing flame retardant and an organophosphine oxide.

The nitrogen-containing flame retardant comprises melamine polyphosphate, melamine cyanurate, melamine pyrophosphate, melamine phosphate, or a combination thereof. In some embodiments, the flame retardant comprises melamine cyanurate.

The organophosphine oxide has the formula 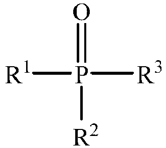 wherein R¹, R², and R³ are each independently C₄-C₂₄ hydrocarbyl. The C₄-C₂₄ hydrocarbyl can be, for example, C₄-C₂₄ alkyl, C₆-C₂₄ aryl, C₇-C₂₄ alkylaryl, or C₇-C₂₄ arylalkyl.

Specific organophosphine oxides include triphenylphosphine oxide, tri-p-tolyl-phosphine oxide, tris(4-nonylphenyl)phosphine oxide, tricyclohexylphosphine oxide, tri-n-butylphosphine oxide, tri-n-hexylphosphine oxide, tri-n-octylphosphine oxide, benzyl bis(cyclohexyl)phosphine oxide, benzyl bis(phenyl)phosphine oxide, phenyl bis(n-hexyl)phosphine oxide, and combinations thereof. In some embodiments, the organophosphine oxide comprises triphenylphosphine oxide.

The composition comprises the flame retardant in an amount of 12 to 28 weight percent, based on the total weight of the composition. Within this range, the flame retardant amount can be 15 to 25 weight percent. The flame retardant amount includes the nitrogen-containing flame retardant in an amount of 2 to 10 weight percent, specifically 4 to 8 weight percent, and the organophosphine oxide in an amount of 7 to 21 weight percent, specifically 9 to 19 weight percent, more specifically 12 to 19 weight percent, yet more specifically 14 to 19 weight percent, all based on the total weight of the composition.

The composition can, optionally, include flame retardants in addition to the nitrogen-containing flame retardant and the organophosphine oxide. Such additional flame retardants can include, for example, metal dialkylphosphinates (such as aluminum tris(diethylphosphinate), organophosphate esters (such as resorcinol bis(diphenyl phosphate) and bisphenol A bis(diphenyl phosphate)), metal hydroxides (such as magnesium hydroxide), and combinations thereof. In some embodiments, the flame retardant consists of the nitrogen-containing flame retardant and the organophosphine oxide. In some embodiments, the flame retardant consists of melamine cyanurate and triphenylphosphine oxide.

In addition to the poly(alkylene terephthalate), the polycarbonate, the polyetherimide, and the flame retardant, the composition comprises glass fibers. Suitable glass fibers include those based on E, A, C, ECR, R, S, D, and NE glasses, as well as quartz. In some embodiments, the glass fiber has a diameter of 2 to 30 micrometers, specifically 5 to 25 micrometers, more specifically 10 to 15 micrometers. In some embodiments, the length of the glass fibers before compounding is 2 to 7 millimeters, specifically 3 to 5 millimeters. The glass fiber can, optionally, include a so-called adhesion promoter to improve its compatibility with the poly(phenylene ether) and the polystyrene. Adhesion promoters include chromium complexes, silanes, titanates, zirco-aluminates, propylene maleic anhydride copolymers, reactive cellulose esters and the like. Suitable glass fiber is commercially available from suppliers including, for example, Owens Corning, Nippon Electric Glass, PPG, and Johns Manville.

The composition comprises the glass fibers in an amount of 20 to 40 weight percent, based on the total weight of the composition. Within this range, the glass fiber amount can be 27 to 36 weight percent.

The composition can, optionally, further comprise talc. When present, the talc can be used in an amount of 1 to 10 weight percent, specifically 2 to 8 weight percent, more specifically 3 to 6 weight percent, based on the total weight of the composition.

The composition can, optionally, further comprise one or more additives known in the thermoplastics art. For example, the composition can, optionally, further comprise an additive chosen from stabilizers, mold release agents, lubricants, processing aids, drip retardants, nucleating agents, UV blockers, dyes, pigments, antioxidants, anti-static agents, blowing agents, mineral oil, metal deactivators, antiblocking agents, and the like, and combinations thereof. When present, such additives are typically used in a total amount of less than or equal to 5 weight percent, specifically less than or equal to 2 weight percent, more specifically less than or equal to 1 weight percent, based on the total weight of the composition. In some embodiments, the composition comprises 0.05 to 0.4 weight percent poly(styrene-acrylonitrile)-encapsulated polytetrafluoroethylene.

In some embodiments, the composition comprises less than or equal to 2 weight percent (i.e., 0 to 2 weight percent) of polycarbonate-polysiloxane block copolymer. Within this limit, the maximum polycarbonate-polysiloxane block copolymer content can be 1 weight percent. Alternatively, the composition can exclude polycarbonate-polysiloxane block copolymer.

The composition can, optionally, exclude one or more of impact modifiers and polyestercarbonates. In some embodiments, the composition excludes any polymer other than the poly(alkylene terephthalate), the polycarbonate, the polyetherimide, and the optional poly(styrene-acrylonitrile)-encapsulated polytetrafluoroethylene. In some embodiments, the composition is chlorine-free and bromine-free.

In a very specific embodiment of the composition, the poly(alkylene terephthalate) comprises poly(butylene terephthalate); the polycarbonate comprises repeat units having the formula 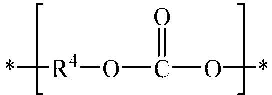 wherein at least 90 percent of the total number of R⁴ groups have the formula 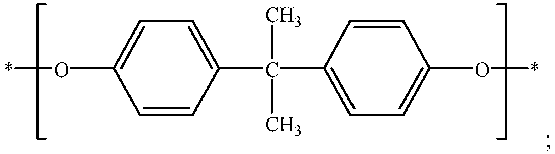 the polyetherimide comprises an imidized copolymer of 1,3-phenylenediamine and 5,5'-[(1-methylethylidene)bis(4,1-phenyleneoxy)]bis(1,3-Isobenzofurandione); the nitrogen-containing flame retardant comprises melamine cyanurate; the organophosphine oxide comprises triphenylphosphine oxide; the composition excludes impact modifiers; the composition comprises 20 to 30 weight percent of the poly(alkylene terephthalate), 10 to 20 weight percent of the polycarbonate, 3 to 8 weight percent of the polyetherimide, 4 to 8 weight percent of the nitrogen-containing flame retardant, 14 to 19 weight percent of the organophosphine oxide, and 27 to 36 weight percent of the glass fibers; the composition further comprises 2 to 8 weight percent of talc, and 0.05 to 0.4 weight percent poly(styrene-acrylonitrile)-encapsulated polytetrafluoroethylene; and the poly(alkylene terephthalate) and the polycarbonate are present in a weight ratio of 1.2:1 to 3: 1.

The composition is useful for forming articles, including fan blades and housings, electrical connectors, electrical relays, and other parts for the electrical, electronics, lighting, appliance, automotive, and healthcare industries. Suitable methods of forming such articles include single layer and multilayer sheet extrusion, injection molding, blow molding, profile extrusion, pultrusion, compression molding, thermoforming, pressure forming, hydroforming, vacuum forming, and the like. Combinations of the foregoing article fabrication methods can be used.

Thus, one embodiment is an article comprising a composition comprising, based on the total weight of the composition: 15 to 35 weight percent of a poly(alkylene terephthalate); 5 to 25 weight percent of a polycarbonate; 2 to 10 weight percent of a polyetherimide; 12 to 28 weight percent of a flame retardant comprising 2 to 10 weight percent of a nitrogen-containing flame retardant comprising melamine polyphosphate, melamine cyanurate, melamine pyrophosphate, melamine phosphate, or a combination thereof, and 7 to 21 weight percent of an organophosphine oxide having the formula 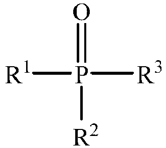 wherein R¹, R², and R³ are each independently C₄-C₂₄ hydrocarbyl; and 20 to 40 weight percent of glass fibers.

The variations in the composition described above are applicable as well to the article. In a very specific embodiment of the article, the poly(alkylene terephthalate) comprises poly(butylene terephthalate); the polycarbonate comprises repeat units having the formula 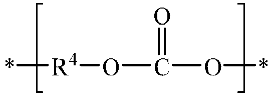 wherein at least 90 percent of the total number of R⁴ groups have the formula 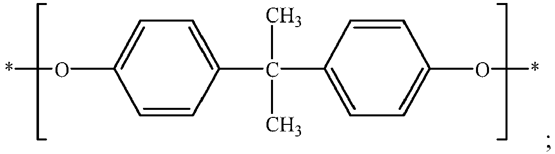 the polyetherimide comprises an imidized copolymer of 1,3-phenylenediamine and 5,5'-[(1-methylethylidene)bis(4,1-phenyleneoxy)]bis(1,3-Isobenzofurandione); the nitrogen-containing flame retardant comprises melamine cyanurate; the organophosphine oxide comprises triphenylphosphine oxide; the composition excludes impact modifiers; the composition comprises 20 to 30 weight percent of the poly(alkylene terephthalate), 10 to 20 weight percent of the polycarbonate, 3 to 8 weight percent of the polyetherimide, 4 to 8 weight percent of the nitrogen-containing flame retardant, 14 to 19 weight percent of the organophosphine oxide, and 27 to 36 weight percent of the glass fibers; the composition further comprises 2 to 8 weight percent of talc, and 0.05 to 0.4 weight percent poly(styrene-acrylonitrile)-encapsulated polytetrafluoroethylene; and the poly(alkylene terephthalate) and the polycarbonate are present in a weight ratio of 1.2:1 to 3: 1.

The invention includes at least the following embodiments.

Embodiment 1: A composition comprising, based on the total weight of the composition, 15 to 35 weight percent of a poly(alkylene terephthalate); 5 to 25 weight percent of a polycarbonate; 2 to 10 weight percent of a polyetherimide; 12 to 28 weight percent of a flame retardant comprising 2 to 10 weight percent of a nitrogen-containing flame retardant comprising melamine polyphosphate, melamine cyanurate, melamine pyrophosphate, melamine phosphate, or a combination thereof, and 7 to 21 weight percent of an organophosphine oxide having the formula 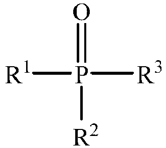 wherein R¹, R², and R³ are each independently C₄-C₂₄ hydrocarbyl; and 20 to 40 weight percent of glass fibers.

Embodiment 2: The composition of embodiment 1, wherein the polyester comprises poly(ethylene terephthalate), poly(butylene terephthalate), or a combination thereof.

Embodiment 3: The composition of embodiment 1, wherein the poly(alkylene terephthalate) comprises poly(butylene terephthalate).

Embodiment 4: The composition of any of embodiments 1-3, wherein the polycarbonate comprises repeat units having the formula 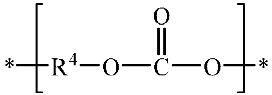 wherein at least 60 percent of the total number of R⁴ groups are aromatic.

Embodiment 5: The composition of embodiment 4, wherein at least 90 percent of the total number of R⁴ groups have the formula

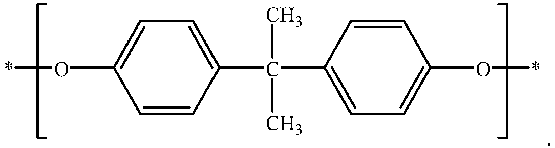

Embodiment 6: The composition of any of embodiments 1-5, wherein the poly(alkylene terephthalate) and the polycarbonate are present in a weight ratio of 1.2:1 to 4:1.

Embodiment 7: The composition of any of embodiments 1-6, wherein the polyetherimide comprises 10 to 1000 repeating units having the structure 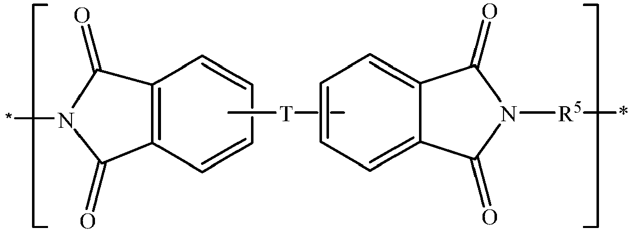 wherein R⁵ is C₁-C₁₈ hydrocarbylene; and T is -O- or a group of the formula -O-Z-O-wherein the divalent bonds of the -O- or the -O-Z-O- group are in the 3,3', 3,4', 4,3', or the 4,4' positions, and wherein Z comprises 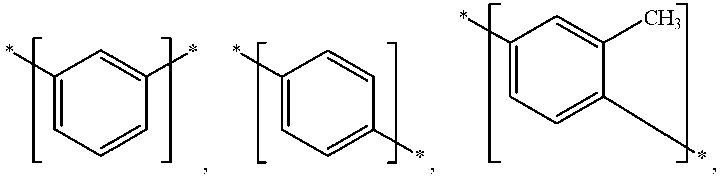 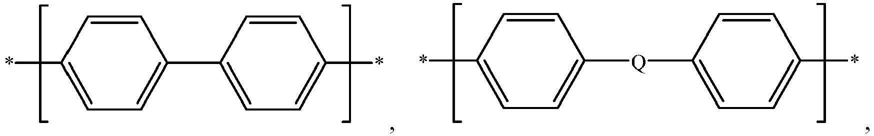 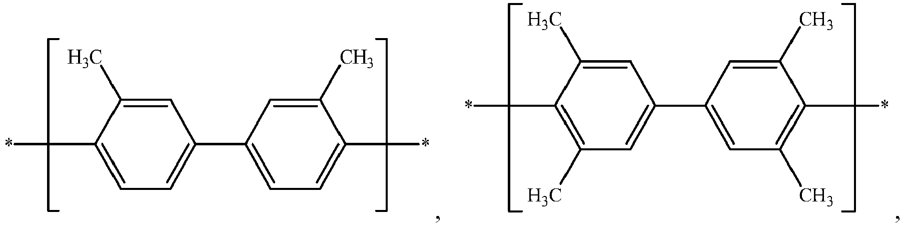 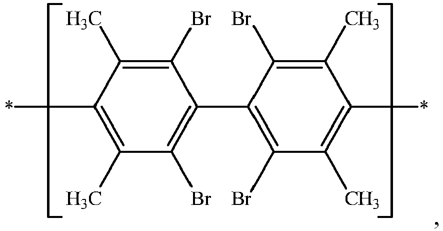 or 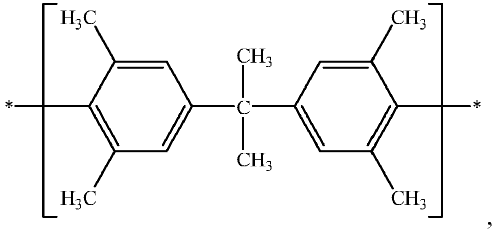 wherein Q is a divalent moiety comprising -O-, -S-, -C(O)-, -SO₂- -SO-, -C_{y}H_{2y}- where y is 1 to 8, or -CₚH_{q}Fᵣ- where p is from 1 to 8, q is 0 to 15, r is 1 to 16, and q + r = 2p.

Embodiment 8: The composition of any of embodiments 1-7, wherein the polyetherimide comprises an imidized copolymer of 1,3-phenylenediamine and 5,5'-[(1-methylethylidene)bis(4,1-phenyleneoxy)]bis(1,3-Isobenzofurandione).

Embodiment 9: The composition of any of embodiments 1-8, wherein the nitrogen-containing flame retardant comprises melamine cyanurate.

Embodiment 10: The composition of any of embodiments 1-9, wherein the organophosphine oxide comprises triphenylphosphine oxide, tri-p-tolyl-phosphine oxide, tris-(4-nonylphenyl)phosphine oxide, tricyclohexylphosphine oxide, tri-n-butylphosphine oxide, tri-n-hexylphosphine oxide, tri-n-octylphosphine oxide, benzyl bis(cyclohexyl)phosphine oxide, benzyl bis(phenyl)phosphine oxide, phenyl bis(n-hexyl)phosphine oxide, or a combination thereof.

Embodiment 11: The composition of any of embodiments 1-10, wherein the organophosphine oxide comprises triphenylphosphine oxide.

Embodiment 12: The composition of any of embodiments 1-11, further comprising 1 to 10 weight percent of talc.

Embodiment 13: The composition of any of embodiments 1-12, further comprising 0.05 to 0.4 weight percent poly(styrene-acrylonitrile)-encapsulated polytetrafluoroethylene.

Embodiment 14: The composition of any of embodiments 1-13, excluding impact modifiers.

Embodiment 15: The composition of embodiment 1, wherein the poly(alkylene terephthalate) comprises poly(butylene terephthalate); wherein the polycarbonate comprises repeat units having the formula 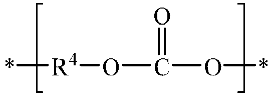 wherein at least 90 percent of the total number of R⁴ groups have the formula 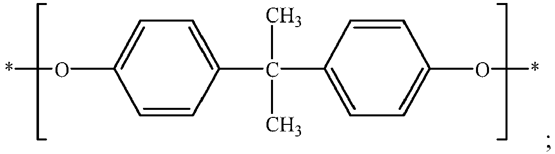 wherein the polyetherimide comprises an imidized copolymer of 1,3-phenylenediamine and 5,5'-[(1-methylethylidene)bis(4,1-phenyleneoxy)]bis(1,3-Isobenzofurandione); wherein the nitrogen-containing flame retardant comprises melamine cyanurate; wherein the organophosphine oxide comprises triphenylphosphine oxide; wherein the composition excludes impact modifiers; wherein the composition comprises 20 to 30 weight percent of the poly(alkylene terephthalate), 10 to 20 weight percent of the polycarbonate, 3 to 8 weight percent of the polyetherimide, 4 to 8 weight percent of the nitrogen-containing flame retardant, 14 to 19 weight percent of the organophosphine oxide, and 27 to 36 weight percent of the glass fibers; wherein the composition further comprises 2 to 8 weight percent of talc, and 0.05 to 0.4 weight percent poly(styrene-acrylonitrile)-encapsulated polytetrafluoroethylene; and wherein the poly(alkylene terephthalate) and the polycarbonate are present in a weight ratio of 1.2:1 to 3: 1.

Embodiment 16: An article comprising a composition comprising: 15 to 35 weight percent of a poly(alkylene terephthalate); 5 to 25 weight percent of a polycarbonate; 2 to 10 weight percent of a polyetherimide; 12 to 28 weight percent of a flame retardant comprising 2 to 10 weight percent of a nitrogen-containing flame retardant comprising melamine polyphosphate, melamine cyanurate, melamine pyrophosphate, melamine phosphate, or a combination thereof, and 7 to 21 weight percent of an organophosphine oxide having the formula 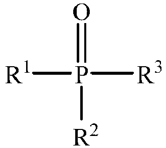 wherein R¹, R², and R³ are each independently C₄-C₂₄ hydrocarbyl; and 20 to 40 weight percent of glass fibers.

Embodiment 17: The article of claim 16, wherein the poly(alkylene terephthalate) comprises poly(butylene terephthalate); wherein the polycarbonate comprises repeat units having the formula 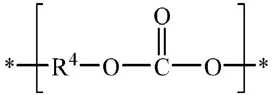 wherein at least 90 percent of the total number of R⁴ groups have the formula 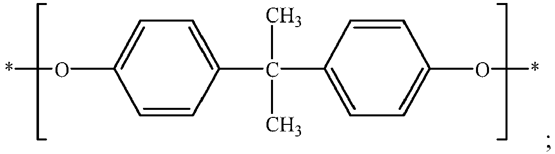 wherein the polyetherimide comprises an imidized copolymer of 1,3-phenylenediamine and 5,5'-[(1-methylethylidene)bis(4,1-phenyleneoxy)]bis(1,3-Isobenzofurandione); wherein the nitrogen-containing flame retardant comprises melamine cyanurate; wherein the organophosphine oxide comprises triphenylphosphine oxide; wherein the composition excludes impact modifiers; wherein the composition comprises 20 to 30 weight percent of the poly(alkylene terephthalate), 10 to 20 weight percent of the polycarbonate, 3 to 8 weight percent of the polyetherimide, 4 to 8 weight percent of the nitrogen-containing flame retardant, 14 to 19 weight percent of the organophosphine oxide, and 27 to 36 weight percent of the glass fibers; wherein the composition further comprises 2 to 8 weight percent of talc, and 0.05 to 0.4 weight percent poly(styrene-acrylonitrile)-encapsulated polytetrafluoroethylene; and wherein the poly(alkylene terephthalate) and the polycarbonate are present in a weight ratio of 1.2:1 to 3: 1.

### EXAMPLES 1-9, COMPARATIVE EXAMPLES 1-4

The materials used in the examples are summarized in Table 1.

**Table 1**

| Acronym/Name | Chemical Name (Use) | Trade Name, Source | CAS # |
|---|---|---|---|
| PC | Polycarbonate derived from bisphenol A | LEXAN™ C001 Resin, SABIC Innovative Plastics | 111211-39-3 |
| PBT | Poly(butylene terephthalate) | VALOX™ 315 Resin, SABIC Innovative Plastics | 30965-26-5 |
| TPPO | Triphenylphosphine oxide | Shanghai Weifang Chemical Co., Ltd. | 791-28-6 |
| SPB100 | Phenoxy phosphazene | SPB-100, Otsuka Chemical Co., Ltd. | 28212-48-8 |
| BPADP | Bisphenol A bis(diphenyl phosphate) | Daihachi Chemical Industry Co., Ltd. | 181028-79-5 |
| PX200 | Aromatic polyphosphate (tetrakis(2,6-dimethylphenyl) 1,3-phenylene biphosphate) | Nagase Co. Ltd. | 139189-30-3 |
| MC | Melamine cyanurate | Shouguang Weidong Chemical Co., Ltd. | 37640-57-6 |
| PEI | Polyetherimide | ULTEM™ 1010 Resin, SABIC Innovative Plastics | 61128-46-9 |
| Glass Fiber | SiO₂ fibrous glass (diameter 13 micrometers) | Nippon Electric Co. | 65997-17-3 |
| Talc | Luzenac fine talc, median particle size about 1 micrometer | Luzenac Inc. | 14807-96-6 |
| TSAN | Poly(tetrafluoroethylene) : poly(styrene-acrylonitrile), 50:50 | CYCOLAC™ 44449-1000-HL Resin, SABIC Innovative Plastics | 9002-84-0, 9003-54-7 |

All testing, except flammability, follows ASTM protocols. The testing methods, standards, and conditions are listed in Table 2.

**Table 2**

| Test | Standards | Testing Conditions |
|---|---|---|
| Melt Volume Rate (MVR) | ASTM D1238 | 250°C, 5 kg |
| Uniaxial Tensile test | ASTM D638 | 5 mm/min |
| Notched Izod Impact (NII) | ASTM D256 | 5 lbf, 23 °C, 3.2 mm |
| Heat Deflection Temperature (HDT) | ASTM D648 | 3.2 mm, 1.82 MPa |

Flammability testing was conducted under UL94 regulations and the total flame-out-time was calculated at a specified thickness. Table 3 shows the criteria for V-0, V-1 and V-2 ratings under UL94 standards.

**Table 3**

| Criteria conditions | V-0 | V-1 | V-2 |
|---|---|---|---|
| After-flame time for each individual specimen t1 or t2 | ≤10s | ≤30s | ≤30s |
| Total afterflame time for any condition set (t1 + t2 for the 5 specimens) | ≤50s | ≤250s | ≤250s |
| Afterflame plus afterglow time for each individual specimen after the second flame application (t2 + t3) | ≤30s | ≤60s | ≤60s |
| Afterflame or afterglow of any specimen up to the holding clamp | No | No | No |
| Cotton indicator ignited by flaming particles or drops | No | No | No |

To compound the compositions, all ingredients except glass fiber were pre-blended and added to the feed-throat of a twin-screw extruder. Glass fibers were added downstream. Typical extrusion conditions are summarized in Table 4.

**Table 4**

| Parameter | units | value |
|---|---|---|
| Die | mm | 4 |
| Zone 1 Temp | °C | 100 |
| Zone 2 Temp | °C | 200 |
| Zone 3 Temp | °C | 240 |
| Zone 4 Temp | °C | 240 |
| Zone 5 Temp | °C | 240 |
| Zone 6 Temp | °C | 240 |
| Zone 7 Temp | °C | 250 |
| Zone 8 Temp | °C | 250 |
| Zone 9 Temp | °C | 260 |
| Die Temp | °C | 265 |
| Screw speed | rpm | 200 |
| Throughput | kg/hr | 60 |

The extruded pellets were molded in different shapes for mechanical testing. Table 5 summarizes typical molding conditions.

**Table 5**

| Parameter | units | value |
|---|---|---|
| Pre-drying time | hours | 4 |
| Pre-drying temperature | °C | 120 |
| Hopper temperature | °C | 50 |
| Zone 1 temperature | °C | 250 |
| Zone 2 temperature | °C | 250 |
| Zone 3 temperature | °C | 250 |
| Nozzle temperature | °C | 250 |
| Mold temperature | °C | 50 |
| Screw speed | rpm | 100 |
| Back pressure | kgf/cm² | 50 |
| Molding Machine | -- | FAUNC |
| Mold Type | -- | ASTM |

Various phosphorus-containing organic compounds were tested as fire retardants in polyester-polycarbonate compositions. The compounds tested included oligomeric aromatic phosphate (PX200), triphenylphosphine oxide (TPPO), polyphosphonate (FRX100), and bisphenol A bis(diphenyl phosphate) (BPADP), in order to evaluate their flame retardant performance for high polyester loading in reinforced polyester-polycarbonate blends. Compositions and properties are summarized in Table 6 below.

**Table 6**

| | C. Ex. 1 | C. Ex. 2 | C. Ex. 3 | C. Ex. 4 | Ex. 1 | Ex. 2 | C. Ex. 5 | C. Ex. 6 |
|---|---|---|---|---|---|---|---|---|
| COMPOSITIONS | | | | | | | | |
| PBT | 22.8 | 22.8 | 25.8 | 25.8 | 22.8 | 25.8 | 30.8 | 25.8 |
| PC | 17 | 17 | 11 | 11 | 17 | 11 | 11 | 11 |
| PEI | 5 | 5 | 5 | 5 | 5 | 5 | 0 | 0 |
| MC | 6 | 6 | 6 | 6 | 6 | 6 | 6 | 9 |
| Talc | 4 | 4 | 4 | 4 | 4 | 4 | 4 | 4 |
| Glass fiber | 30 | 30 | 33 | 33 | 30 | 33 | 33 | 33 |
| TSAN | 0.2 | 0.2 | 0.2 | 0.2 | 0.2 | 0.2 | 0.2 | 0.2 |
| BPADP | 15 | 0 | 0 | 0 | 0 | 0 | 0 | 0 |
| PX200 | 0 | 15 | 15 | 0 | 0 | 0 | 0 | 0 |
| TPPO | 0 | 0 | 0 | 0 | 15 | 15 | 15 | 17 |
| SPB100 | 0 | 0 | 0 | 15 | 0 | 0 | 0 | 0 |

| PROPERTIES | | | | | | | | |
|---|---|---|---|---|---|---|---|---|
| MVR (cm³/10 min) | 23 | 20 | 48 | 23 | 21 | 36 | 15 | 8 |
| Tens. Modulus (GPa) | 11.4 | 11.6 | 11.8 | 11.3 | 12.7 | 10.7 | 11.2 | 10.8 |
| Tens. Strength (MPa) | 109 | 121 | 103 | 98 | 87 | 95 | 84 | 77 |
| Tens. Elongation (%) | 1.5 | 1.7 | 1.6 | 1.5 | 1.1 | 1.6 | 1.2 | 1.1 |
| HDT (°C) | 75 | 84 | 120 | 156 | 86 | 123 | 140 | 122 |
| Notched Izod (J/m) | 56 | 64 | 42 | 61 | 55 | 52 | 47 | 50 |
| V-0@0.8mm | fail | fail | fail | fail | pass | pass | fail | fail |
| V-0@1.2mm | fail | pass | fail | fail | pass | pass | -- | -- |
| V-0@1.5mm | fail | pass | pass | -- | pass | pass | -- | -- |
| Plate-out issue | yes | no | no | -- | no | no | -- | -- |

As is evident from the results in Table 6, glass-filled PBT/PC compositions with the organophosphine oxide TPPO showed superior fire retardant properties in comparison to corresponding compositions with the triaryl phosphate BPADP, the oligomeric aromatic phosphate PX200, and the phenoxy phosphazene SPB100. Comparative Example 1 (C. Ex. 1) demonstrated that, even with a relatively low PBT/PC ratio, V-0 could not be achieved by using BPADP. In addition, liquid BPADP can severely harm the material's heat resistance (HDT <80°C) and cause a plate-out problem, as observed in this experiment. For the formulation of Comparative Example 4 (C. Ex. 4), using the SPB100 (phenoxy phosphazene), a V-0 rating at 1.2 mm was also not obtained.

In Comparative Examples 2 and 3 (C. Ex. 2 and C. Ex. 3), using the oligomeric aromatic phosphate PX200, a V-0 rating at different thicknesses became possible. When the PBT/PC ratio is high, in the formulation of C. Ex. 3, a V-0 rating at 1.5 mm was achieved. If the PBT/PC ratio was adjusted to a lower value (C. Ex. 2), an even better fire retardant performance could be achieved, V-0 at 1.2 mm. However, when TPPO was used in the formulation of Examples 1-2 (Ex. 1-2), it was found that the fire retardant performance was unexpectedly significantly even better than that of the corresponding PX200-containing composition. At both PBT/PC ratios, a V-0 rating at 0.8 mm could be achieved. Moreover, the formulations of Ex. 1 and Ex. 2 showed improved heat resistance compared to the widely used fire retardant of C. Ex. 1. Another advantage of using TPPO as a fire retardant in the formulation was that no plate-out problem occurred in the formulations, which results in a safer and more environmentally friendly composition than when using BPADP as a fire retardant. Comparative Examples 5 and 6 demonstrate that, even with TPPO, polyetherimide is necessary to achieve a V-0 rating at a thickness of 0.8 millimeters.

To further evaluate TPPO in polyester-polycarbonate compositions, further formulations were tested in which the relative amounts of polyester, polycarbonate, and TPPO were varied. The various formulations and properties are summarized in Table 7.

**Table 7**

| | Ex. 3 | Ex. 4 | Ex. 5 | Ex. 6 | Ex. 7 | Ex. 8 | Ex. 9 |
|---|---|---|---|---|---|---|---|
| COMPOSITIONS | | | | | | | |
| PBT | 27 | 25 | 27 | 25 | 23 | 25 | 25 |
| PC | 13 | 15 | 11 | 13 | 15 | 11 | 11 |
| TPPO | 11 | 11 | 13 | 13 | 13 | 15 | 17 |
| MC | 6 | 6 | 6 | 6 | 6 | 6 | 6 |
| Talc | 4 | 4 | 4 | 4 | 4 | 4 | 4 |
| PEI | 5 | 5 | 5 | 5 | 5 | 5 | 5 |
| TSAN | 1 | 1 | 1 | 1 | 1 | 1 | 1 |
| Glass Fiber | 33 | 33 | 33 | 33 | 33 | 33 | 31 |

| PROPERTIES | | | | | | | |
|---|---|---|---|---|---|---|---|
| MVR (cm³/10 min) | 30 | 23 | 30 | 24 | 26 | 38 | 37 |
| Tens. Modulus (GPa) | -- | -- | -- | -- | -- | 10.7 | 12.4 |
| Tens. Strength (MPa) | -- | -- | -- | -- | -- | 95 | 103 |
| Tens. Elongation (%) | -- | -- | -- | -- | -- | 1.6 | 1.4 |
| Notched Izod (J/m) | -- | -- | -- | -- | -- | 51 | 53 |
| HDT (°C) | 104 | 110 | 128 | 110 | 101 | 123 | 111 |
| UL94 Rating at thickness (mm) | V-0 @1.2 | V-0 @1.2 | V-0 @1.2 | V-0 @1.2 | V-0 @1.2 | V-0 @0.8 | V-0 @0.8 |

As evident by the results in Table 8, not only were fire retardant properties excellent for all formulations, in that a UL94 rating of V-0 was obtained for all formulations at thicknesses no greater than 1.2 millimeters, but by providing a sufficient amount of the TPPO compound, specifically above 13 parts by weight in the above formulations, a UL94 rating of V-0 at 0.8 mm was obtained, even at a high weight ratio of polyester to polycarbonate. Since it is known that PBT is more flammable than PC, the higher the PBT/PC ratio, the worse the expected fire retardant performance. Nevertheless, a V-0 rating was obtained even at a ratio of polyester to polycarbonate of 25:11, i.e., when the amount of polyester was more than twice the amount of polycarbonate. Moreover, the polycarbonate-polyester compositions showed not only efficient and ecologically friendly flame retardancy properties, but also very high melt flow properties, specifically a Melt Volume Rate (MVR) of greater than 20 cm³/10 minutes for all formulations, more specifically an MVR of greater than 30 cm³/10 minutes for Examples 8 and 9. Thus, an increased amount of TPPO itself, in the present formulations, was found to unexpectedly contribute to a higher melt flow (MVR), comparing Examples. 8 and 9 to Example 5. The MVR, for example, was significantly higher than obtained using BPADP (MVR of 23 cm³/10 minutes) or SPB100 (MVR 23 cm³/10 minutes), referring to Table 6 above.

## Claims

1. A composition comprising, based on the total weight of the composition,
15 to 35 weight percent of a poly(alkylene terephthalate);
5 to 25 weight percent of a polycarbonate;
2 to 10 weight percent of a polyetherimide;
12 to 28 weight percent of a flame retardant comprising
2 to 10 weight percent of a nitrogen-containing flame retardant comprising melamine polyphosphate, melamine cyanurate, melamine pyrophosphate, melamine phosphate, or a combination thereof, and
7 to 21 weight percent of an organophosphine oxide having the formula 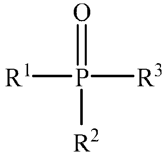 wherein R¹, R², and R³ are each independently C₄-C₂₄ hydrocarbyl; and 20 to 40 weight percent of glass fibers.

2. The composition of claim 1, wherein the polyester comprises poly(ethylene terephthalate), poly(butylene terephthalate), or a combination thereof, and the polyester preferably comprises poly(butylene terephthalate).

3. The composition of claim 1 or 2, wherein the polycarbonate comprises repeat units having the formula 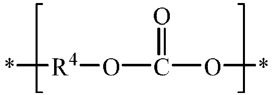 wherein at least 60 percent of the total number of R⁴ groups are aromatic.

4. The composition of claim 3, wherein at least 90 percent of the total number of R⁴ groups have the formula

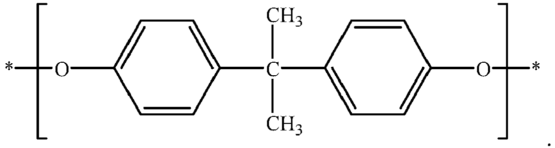

5. The composition of any one of claims 1-4, wherein the poly(alkylene terephthalate) and the polycarbonate are present in a weight ratio of 1.2:1 to 4:1.

6. The composition of any one of claims 1-5, wherein the polyetherimide comprises 10 to 1000 repeating units having the structure 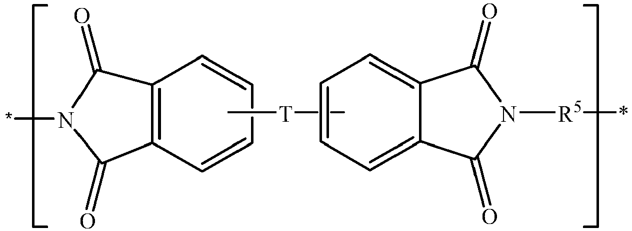 wherein R⁵ is C₁-C₁₈ hydrocarbylene; and T is -O- or a group of the formula -O-Z-O-wherein the divalent bonds of the -O- or the -O-Z-O- group are in the 3,3', 3,4', 4,3', or the 4,4' positions, and wherein Z comprises 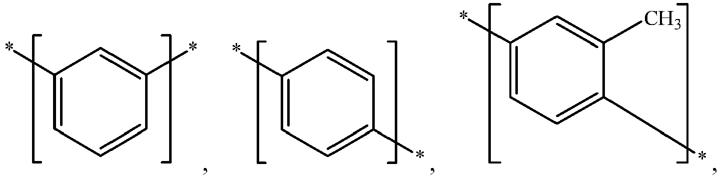 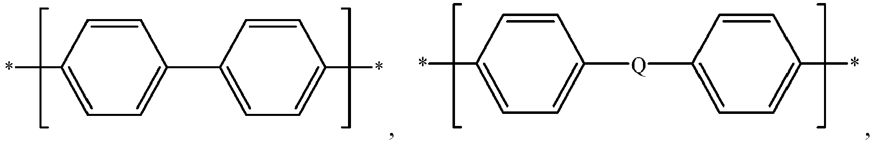 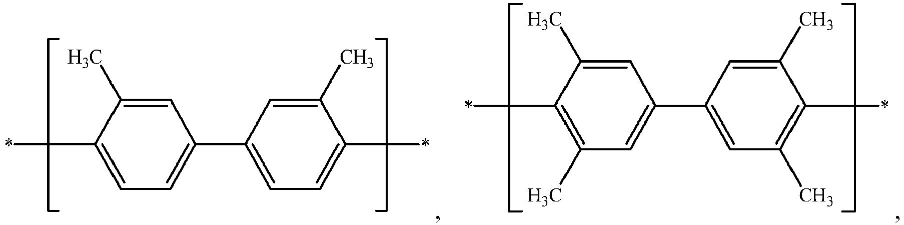 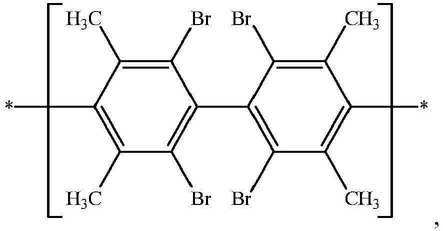 or 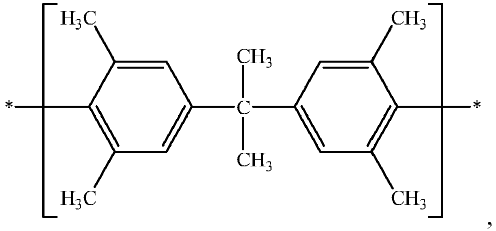 wherein Q is divalent moiety comprising -O-, -S-, -C(O)-, -SO₂- -SO-, -C_{y}H_{2y}- where y is 1 to 8, or -CₚH_{q}Fᵣ- where p is from 1 to 8, q is 0 to 15, r is 1 to 16, and q + r = 2p.

7. The composition of any one of claims 1-6, wherein the polyetherimide comprises an imidized copolymer of 1,3-phenylenediamine and 5,5'-[(1-methylethylidene)bis(4,1-phenyleneoxy)]bis(1,3-Isobenzofurandione).

8. The composition of any one of claims 1-7, wherein the nitrogen-containing flame retardant comprises melamine cyanurate.

9. The composition of any one of claims 1-8, wherein the organophosphine oxide comprises triphenylphosphine oxide, tri-p-tolyl-phosphine oxide, tris-(4-nonylphenyl)phosphine oxide, tricyclohexylphosphine oxide, tri-n-butylphosphine oxide, tri-n-hexylphosphine oxide, tri-n-octylphosphine oxide, benzyl bis(cyclohexyl)phosphine oxide, benzyl bis(phenyl)phosphine oxide, phenyl bis(n-hexyl)phosphine oxide, or a combination thereof, and wherein the organophosphine oxide preferably comprises triphenylphosphine oxide.

10. The composition of any one of claims 1-9, further comprising 1 to 10 weight percent of talc.

11. The composition of any one of claims 1-10, further comprising 0.05 to 0.4 weight percent poly(styrene-acrylonitrile)-encapsulated polytetrafluoroethylene.

12. The composition of any one of claims 1-11, excluding impact modifiers.

13. The composition of claim 1,
wherein the poly(alkylene terephthalate) comprises poly(butylene terephthalate);
wherein the polycarbonate comprises repeat units having the formula 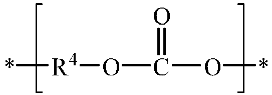 wherein at least 90 percent of the total number of R⁴ groups have the formula 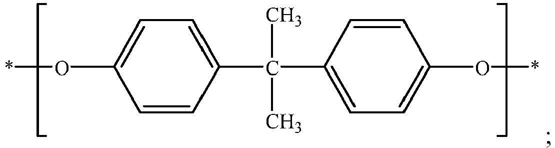 wherein the polyetherimide comprises an imidized copolymer of 1,3-phenylenediamine and 5,5'-[(1-methylethylidene)bis(4,1-phenyleneoxy)]bis(1,3-Isobenzofurandione);
wherein the nitrogen-containing flame retardant comprises melamine cyanurate;
wherein the organophosphine oxide comprises triphenylphosphine oxide;
wherein the composition excludes impact modifiers;
wherein the composition comprises
20 to 30 weight percent of the poly(alkylene terephthalate),
10 to 20 weight percent of the polycarbonate,
3 to 8 weight percent of the polyetherimide,
4 to 8 weight percent of the nitrogen-containing flame retardant,
14 to 19 weight percent of the organophosphine oxide, and
27 to 36 weight percent of the glass fibers;
wherein the composition further comprises
2 to 8 weight percent of talc, and
0.05 to 0.4 weight percent poly(styrene-acrylonitrile)-encapsulated polytetrafluoroethylene; and
wherein the poly(alkylene terephthalate) and the polycarbonate are present in a weight ratio of 1.2:1 to 3:1.

14. An article comprising a composition comprising:
15 to 35 weight percent of a poly(alkylene terephthalate);
5 to 25 weight percent of a polycarbonate;
2 to 10 weight percent of a polyetherimide;
12 to 28 weight percent of a flame retardant comprising
2 to 10 weight percent of a nitrogen-containing flame retardant comprising melamine polyphosphate, melamine cyanurate, melamine pyrophosphate, melamine phosphate, or a combination thereof, and
7 to 21 weight percent of an organophosphine oxide having the formula 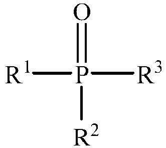 wherein R¹, R², and R³ are each independently C₄-C₂₄ hydrocarbyl; and 20 to 40 weight percent of glass fibers.

15. The article of claim 14,
wherein the poly(alkylene terephthalate) comprises poly(butylene terephthalate);
wherein the polycarbonate comprises repeat units having the formula 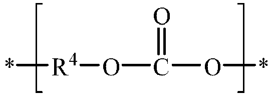 wherein at least 90 percent of the total number of R⁴ groups have the formula 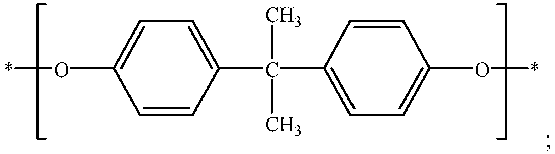 wherein the polyetherimide comprises an imidized copolymer of 1,3-phenylenediamine and 5,5'-[(1-methylethylidene)bis(4,1-phenyleneoxy)]bis(1,3-Isobenzofurandione);
wherein the nitrogen-containing flame retardant comprises melamine cyanurate;
wherein the organophosphine oxide comprises triphenylphosphine oxide;
wherein the composition excludes impact modifiers;
wherein the composition comprises
20 to 30 weight percent of the poly(alkylene terephthalate),
10 to 20 weight percent of the polycarbonate,
3 to 8 weight percent of the polyetherimide,
4 to 8 weight percent of the nitrogen-containing flame retardant,
14 to 19 weight percent of the organophosphine oxide, and
27 to 36 weight percent of the glass fibers;
wherein the composition further comprises
2 to 8 weight percent of talc, and
0.05 to 0.4 weight percent poly(styrene-acrylonitrile)-encapsulated polytetrafluoroethylene; and
wherein the poly(alkylene terephthalate) and the polycarbonate are present in a weight ratio of 1.2:1 to 3:1.

## Patentansprüche

1. Zusammensetzung mit, bezogen auf das Gesamtgewicht der Zusammensetzung:
15 bis 35 Gewichtsprozent eines Poly(alkylenterephthalats);
5 bis 25 Gewichtsprozent eines Polycarbonats;
2 bis 10 Gewichtsprozent eines Polyetherimids;
12 bis 28 Gewichtsprozent eines Flammschutzmittels, mit:
2 bis 10 Gewichtsprozent eines stickstoffhaltigen Flammschutzmittels, das Melaminpolyphosphat, Melamincyanurat, Melaminpyrophosphat, Melaminphosphat oder eine Kombination davon enthält, und
7 bis 21 Gewichtsprozent eines Organophosphinoxids mit der Formel 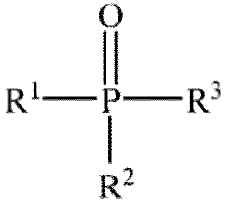 wobei R¹, R² und R³ jeweils unabhängig voneinander C₄- bis C₂₄-Hydrocarbyl bezeichnen; und
20 bis 40 Gewichtsprozent Glasfasern.

2. Zusammensetzung nach Anspruch 1, wobei der Polyester Poly(ethylenterephthalat), Poly(butylenterephthalat) oder eine Kombination davon aufweist, und wobei der Polyester vorzugsweise Poly(butylenterephthalat) aufweist.

3. Zusammensetzung nach Anspruch 1 oder 2, wobei das Polycarbonat Wiederholungseinheiten der Formel 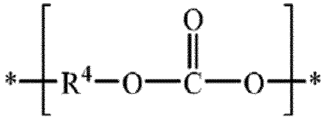 aufweist, wobei mindestens 60 Prozent der Gesamtzahl an R⁴-Gruppen aromatisch sind.

4. Zusammensetzung nach Anspruch 3, wobei mindestens 90 Prozent der Gesamtzahl der R⁴-Gruppen die Formel 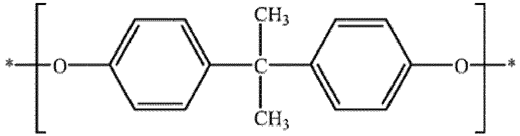 haben.

5. Zusammensetzung nach einem der Ansprüche 1 bis 4, wobei das Poly(alkylenterephthalat) und das Polycarbonat in einem Gewichtsverhältnis von 1,2:1 bis 4:1 vorhanden sind.

6. Zusammensetzung nach einem der Ansprüche 1 bis 5, wobei das Polyetherimid 10 bis 1000 Wiederholungseinheiten mit der Struktur 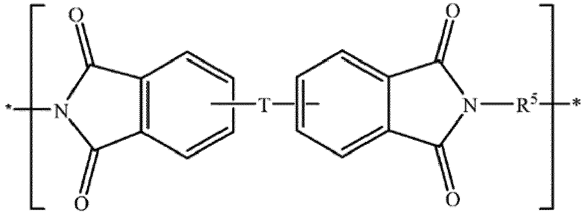 aufweist, wobei R⁵ C₁- bis C₁₈-Hydrocarbylen ist, und T -O- oder eine Gruppe der Formel -O-Z-O- ist, wobei die zweiwertigen Bindungen der -O- oder der -O-Z-O--Gruppe an den Positionen 3,3', 3,4' , 4,3' oder 4,4' vorliegen, und wobei Z aufweist: 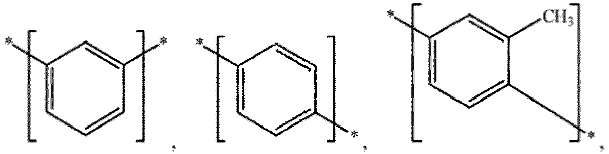 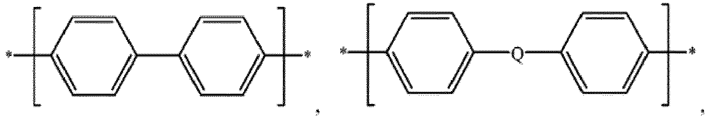 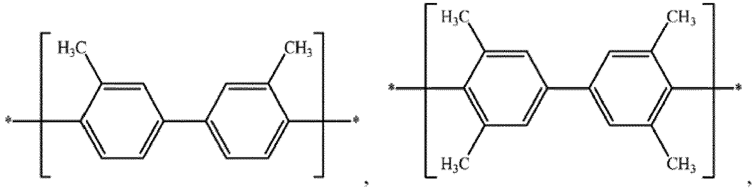 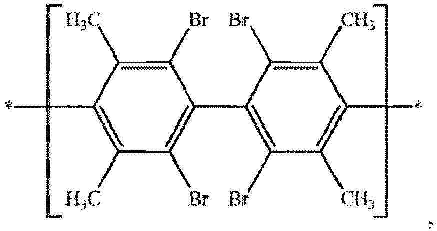 oder 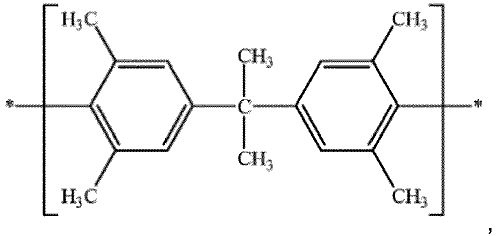 wobei Q eine zweiwertige funktionelle Gruppe ist, die -O-, -S-, -C(O)-, -SO₂ -, -SO-, -C_{y}H_{2y}- aufweist, wobei y = 1 bis 8 ist, oder -CₚH_{q}Fᵣ-, wobei p = 1 bis 8, q = 0 bis 15, r = 1 bis 16 und q + r = 2p betragen.

7. Zusammensetzung nach einem der Ansprüche 1 bis 6, wobei das Polyetherimid ein imidisiertes Copolymer von 1,3-Phenylendiamin und 5,5'-[(1-Methylethyliden)bis(4,1-phenylenoxy)]bis(1,3-isobenzofurandion) aufweist.

8. Zusammensetzung nach einem der Ansprüche 1 bis 7, wobei das stickstoffhaltige Flammschutzmittel Melamincyanurat aufweist.

9. Zusammensetzung nach einem der Ansprüche 1 bis 8, wobei das Organophosphinoxid Triphenylphosphinoxid, Tri-p-tolyl-phosphinoxid, Tris-(4-nonylphenyl)phosphinoxid, Tricyclohexylphosphinoxid, Tri-n-butylphosphinoxid, Tri-n-hexylphosphinoxid, Tri-n-octylphosphinoxid, Benzyl-bis(cyclohexyl)phosphinoxid, Benzyl-bis(phenyl)phosphinoxid, Phenyl-bis(n-hexyl)phosphinoxid oder eine Kombination davon aufweist, und wobei das Organophosphinoxid vorzugsweise Triphenylphosphinoxid aufweist.

10. Zusammensetzung nach einem der Ansprüche 1 bis 9, ferner mit 1 bis 10 Gewichtsprozent Talk.

11. Zusammensetzung nach einem der Ansprüche 1 bis 10, ferner mit 0,05 bis 0,4 Gewichtsprozent poly(styrolacrylnitril)-verkapseltes Polytetrafluorethylen.

12. Zusammensetzung nach einem der Ansprüche 1 bis 11, ohne Schlagzämodifizierer.

13. Zusammensetzung nach Anspruch 1,
wobei das Poly(alkylenterephthalat) Poly(butylenterephthalat) aufweist, wobei das Polycarbonat Wiederholungseinheiten mit der Formel 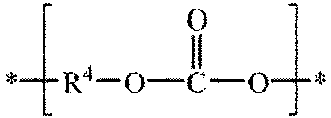 aufweist, wobei mindestens 90 Prozent der Gesamtzahl an R⁴-Gruppen die Formel 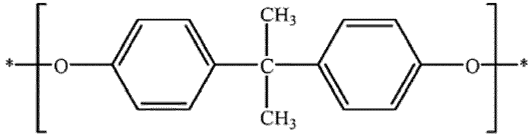 haben, wobei das Polyetherimid ein imidisiertes Copolymer von 1,3-Phenylendiamin und 5,5'-[(1-Methylethyliden)bis(4,1-phenylenoxy)]bis(1,3-isobenzofurandion) aufweist;
wobei das stickstoffhaltige Flammschutzmittel Melamincyanurat enthält;
wobei das Organophosphinoxid Triphenylphosphinoxid enthält,
wobei die Zusammensetzung keine Schlagzähmodifizierer enthält,
wobei die Zusammensetzung aufweist:
20 bis 30 Gewichtsprozent des Poly(alkylenterephthalats),
10 bis 20 Gewichtsprozent des Polycarbonats,
3 bis 8 Gewichtsprozent des Polyetherimids,
4 bis 8 Gewichtsprozent des stickstoffhaltigen Flammschutzmittels,
14 bis 19 Gewichtsprozent des Organophosphinoxids, und
27 bis 36 Gewichtsprozent der Glasfasern;
wobei die Zusammensetzung ferner aufweist:
2 bis 8 Gewichtsprozent Talk, und
0,05 bis 0,4 Gewichtsprozent poly(styrolacrylnitril)-verkapseltes Polytetrafluorethylen, und
wobei das Poly(alkylenterephthalat) und das Polycarbonat in einem Gewichtsverhältnis von 1,2:1 bis 3:1 vorhanden sind.

14. Artikel mit einer Zusammensetzung, die aufweist:
15 bis 35 Gewichtsprozent eines Poly(alkylenterephthalats);
5 bis 25 Gewichtsprozent eines Polycarbonats;
2 bis 10 Gewichtsprozent eines Polyetherimids;
12 bis 28 Gewichtsprozent eines Flammschutzmittels, mit:
2 bis 10 Gewichtsprozent eines stickstoffhaltigen Flammschutzmittel, das Melaminpolyphosphat, Melamincyanurat, Melaminpyrophosphat, Melaminphosphat oder eine Kombination davon enthält, und
7 bis 21 Gewichtsprozent eines Organophosphinoxids mit der Formel 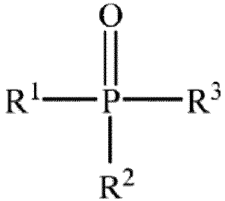 wobei R¹, R² und R³ jeweils unabhängig voneinander C₄- bis C₂₄-Hydrocarbyl bezeichnen; und
20 bis 40 Gewichtsprozent Glasfasern.

15. Artikel nach Anspruch 14,
wobei das Poly(alkylenterephthalat) Poly(butylenterephthalat) aufweist,
wobei das Polycarbonat Wiederholungseinheiten der Formel 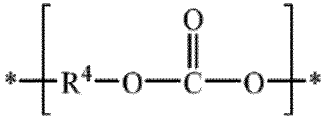 aufweist, wobei mindestens 90 Prozent der Gesamtzahl an R⁴-Gruppen die Formel 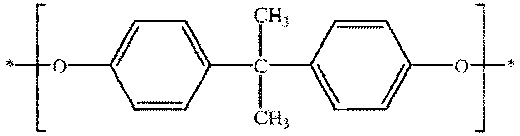 haben,
wobei das Polyetherimid ein imidisiertes Copolymer von 1,3-Phenylendiamin und 5,5'-[(1-Methylethyliden)bis(4,1-phenylenoxy)]bis(1,3-isobenzofurandion) aufweist,
wobei das stickstoffhaltige Flammschutzmittel Melamincyanurat aufweist,
wobei das Organophosphinoxid Triphenylphosphinoxid aufweist,
wobei die Zusammensetzung keine Schlagzämodifizierer enthält,
wobei die Zusammensetzung aufweist:
20 bis 30 Gewichtsprozent des Poly(alkylenterephthalats),
10 bis 20 Gewichtsprozent des Polycarbonats,
3 bis 8 Gewichtsprozent des Polyetherimids,
4 bis 8 Gewichtsprozent des stickstoffhaltigen Flammschutzmittels,
14 bis 19 Gewichtsprozent des Organophosphinoxids, und
27 bis 36 Gewichtsprozent der Glasfasern;
wobei die Zusammensetzung ferner aufweist:
2 bis 8 Gewichtsprozent Talk, und
0,05 bis 0,4 Gewichtsprozent poly(styrolacrylnitril)-verkapseltes Polytetrafluorethylen, und
wobei das Poly(alkylenterephthalat) und das Polycarbonat in einem Gewichtsverhältnis von 1,2:1 bis 3:1 vorhanden sind.

## Revendications

1. Composition comprenant, sur la base du poids total de la composition,
15 à 35 % en poids d'un poly(téréphtalate d'alkylène) ;
5 à 25 % en poids d'un polycarbonate ;
2 à 10 % en poids d'un polyétherimide ;
12 à 28 % en poids d'un retardateur de flamme comprenant
2 à 10 % en poids d'un retardateur de flamme contenant de l'azote comprenant du polyphosphate de mélamine, du cyanurate de mélamine, du pyrophosphate de mélamine, du phosphate de mélamine, ou une combinaison de ceux-ci, et
7 à 21 % en poids d'un oxyde d'organophosphine de formule 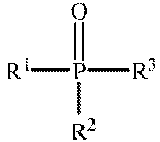 dans laquelle R¹, R² et R³ sont chacun indépendamment un hydrocarbyle en C₄-C₂₄ ; et
20 à 40 % en poids de fibres de verre.

2. Composition selon la revendication 1, dans laquelle le polyester comprend du poly(téréphtalate d'éthylène), du poly(téréphtalate de butylène), ou une combinaison de ceux-ci, et le polyester comprend de préférence du poly(téréphtalate de butylène).

3. Composition selon la revendication 1 ou 2, dans laquelle le polycarbonate comprend des unités répétées de formule 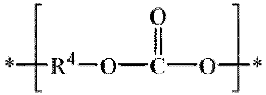 dans laquelle au moins 60 % du nombre total des groupes R⁴ sont aromatiques.

4. Composition selon la revendication 3, dans laquelle au moins 90 % du nombre total des groupes R⁴ sont de formule

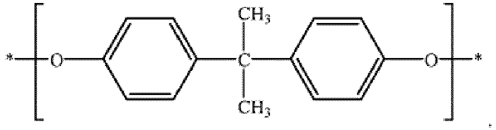

5. Composition selon l'une quelconque des revendications 1 à 4, dans laquelle le poly(téréphtalate d'alkylène) et le polycarbonate sont présents dans un rapport pondéral compris entre 1,2:1 et 4:1.

6. Composition selon l'une quelconque des revendications 1 à 5, dans laquelle le polyétherimide comprend 10 à 1 000 unités récurrentes de structure 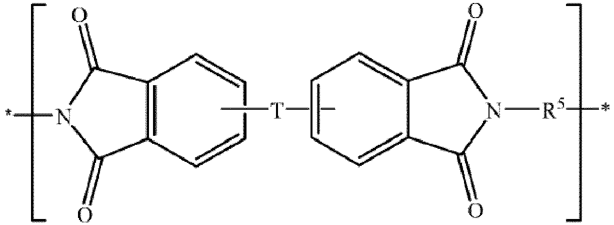 dans laquelle R⁵ est un hydrocarbylène en C₁-C₁₈ ; et T est -O- ou un groupe de formule -O-Z-O- dans lequel les liaisons divalentes du groupe -O- ou -O-Z-O- sont dans les positions 3,3', 3,4', 4,3', ou dans les positions 4,4', et dans laquelle Z comprend 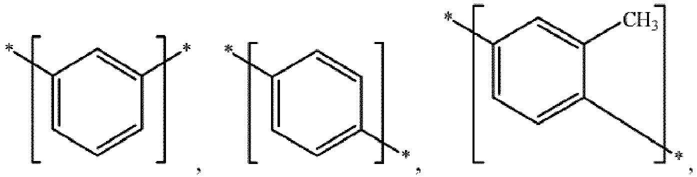 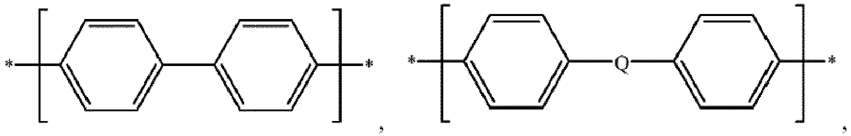 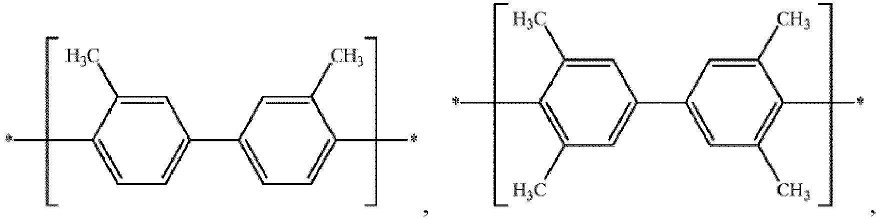 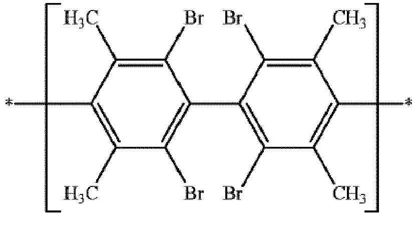 ou 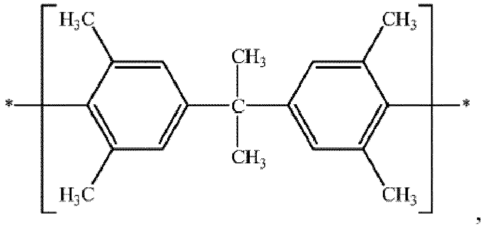 dans lesquels Q est un groupe fonctionnel divalent comprenant -O-, -S-, -C(O)-, -SO₂-, -SO-, -C_{y}H_{2y}- où y vaut de 1 à 8, ou -CₚH_{q}Fᵣ- où p vaut de 1 à 8 , q vaut 0 à 15, r vaut de 1 à 16, et q + r = 2p.

7. Composition selon l'une quelconque des revendications 1 à 6, dans laquelle le polyétherimide comprend un copolymère imidisé de 1,3-phénylènediamine et de 5,5'-[(1-méthyléthylidène)bis(4,1-phénylèneoxy)]bis(1,3-Isobenzofurandione).

8. Composition selon l'une quelconque des revendications 1 à 7, dans laquelle le retardateur de flamme contenant de l'azote comprend du cyanurate de mélamine.

9. Composition selon l'une quelconque des revendications 1 à 8, dans laquelle l'oxyde d'organophosphine comprend de l'oxyde de triphénylphosphine, de l'oxyde de tri-p-tolyl-phosphine, de l'oxyde de tris-(4-nonylphényl)phosphine, de l'oxyde de tricyclohexylphosphine, de l'oxyde de tri-n-butylphosphine, de l'oxyde de tri-n-hexylphosphine, de l'oxyde de tri-n-octylphosphine, de l'oxyde de benzyle bis(cyclohexyl)phosphine, de l'oxyde de benzyle bis(phényl)phosphine, de l'oxyde de phényle bis(n-hexyl)phosphine, ou une combinaison de ceux-ci, et l'oxyde d'organophosphine comprend de préférence de l'oxyde de triphénylphosphine.

10. Composition selon l'une quelconque des revendications 1 à 9, comprenant en outre 1 à 10 % en poids de talc.

11. Composition selon l'une quelconque des revendications 1 à 10, comprenant en outre 0,05 à 0,4 % en poids de polytétrafluoroéthylène encapsulé dans du poly(styrène-acrylonitrile).

12. Composition selon l'une quelconque des revendications 1 à 11, excluant les agents antichocs.

13. Composition selon la revendication 1, dans laquelle
le poly(téréphtalate d'alkylène) comprend du poly(téréphtalate de butylène) ;
le polycarbonate comprend des unités récurrentes de formule 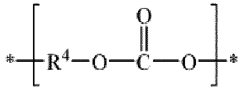 dans lesquelles au moins 90 % du nombre total des groupes R⁴ sont de formule 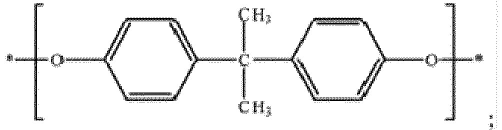 le polyétherimide comprend un copolymère imidisé de 1,3-phénylènediamine et de 5,5'-[(1-méthyléthylidène)bis(4,1-phénylèneoxy)]bis(1,3-isobenzofurandione) ;
le retardateur de flamme contenant de l'azote comprend du cyanurate de mélamine ;
l'oxyde d'organophosphine comprend de l'oxyde de triphénylphosphine ;
la composition exclut les agents antichocs ;
la composition comprend
20 à 30 % en poids du poly(téréphtalate d'alkylène),
10 à 20 % en poids du polycarbonate,
3 à 8 % en poids du polyétherimide,
4 à 8 % en poids du retardateur de flamme contenant de l'azote,
14 à 19 % en poids de l'oxyde d'organophosphine, et
27 à 36 % en poids des fibres de verre ;
la composition comprend en outre
2 à 8 % en poids de talc, et
0,05 à 0,4 % en poids de polytétrafluoroéthylène encapsulé dans du poly(styrène-acrylonitrile) ; et
le poly(téréphtalate d'alkylène) et le polycarbonate sont présents dans un rapport pondéral compris entre 1,2:1 et 3:1.

14. Article comprenant une composition comprenant :
15 à 35 % en poids d'un poly(téréphtalate d'alkylène) ;
5 à 25 % en poids d'un polycarbonate ;
2 à 10 % en poids d'un polyétherimide ;
12 à 28 % en poids d'un retardateur de flamme comprenant
2 à 10 % en poids d'un retardateur de flamme contenant de l'azote comprenant du polyphosphate de mélamine, du cyanurate de mélamine, du pyrophosphate de mélamine, du phosphate de mélamine, ou une combinaison de ceux-ci, et
7 à 21 % en poids d'un oxyde d'organophosphine de formule 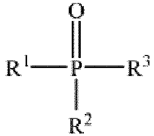 dans laquelle R¹, R² et R³ sont chacun indépendamment un hydrocarbyle en C₄-C₂₄ ; et
20 à 40 % en poids de fibres de verre.

15. Article selon la revendication 14, dans lequel
le poly(téréphtalate d'alkylène) comprend du poly(téréphtalate de butylène) ;
le polycarbonate comprend des unités récurrentes de formule 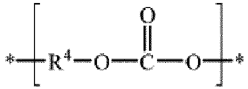 dans lesquelles au moins 90 % du nombre total des groupes R⁴ sont de formule 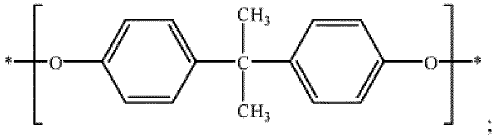 le polyétherimide comprend un copolymère imidisé de 1,3-phénylènediamine et de 5,5'-[(1-méthyléthylidène)bis(4,1-phénylèneoxy)]bis(1,3-isobenzofurandione) ;
le retardateur de flamme contenant de l'azote comprend du cyanurate de mélamine ;
l'oxyde d'organophosphine comprend de l'oxyde de triphénylphosphine ;
la composition exclut les agents antichocs ;
la composition comprend
20 à 30 % en poids du poly(téréphtalate d'alkylène),
10 à 20 % en poids du polycarbonate,
3 à 8 % en poids du polyétherimide,
4 à 8 % en poids du retardateur de flamme contenant de l'azote,
14 à 19 % en poids de l'oxyde d'organophosphine, et
27 à 36 % en poids des fibres de verre ;
la composition comprend en outre
2 à 8 % en poids de talc, et
0,05 à 0,4 % en poids de polytétrafluoroéthylène encapsulé dans du poly(styrène-acrylonitrile) ; et
le poly(téréphtalate d'alkylène) et le polycarbonate sont présents dans un rapport pondéral compris entre 1,2:1 et 3:1.
